# EUROPÄISCHE PATENTSCHRIFT

(11) **EP 2 480 443 B1**
(45) Veröffentlichungstag und Bekanntmachung des Hinweises auf die Patenterteilung: **09.11.2016**
(21) Anmeldenummer: 10757046.7
(22) Anmeldetag: 21.09.2010
(51) Int. Cl.: B62D 15/02, B60R 21/0134, B60W 50/08

(54) **FAHRERASSISTENZSYSTEM FÜR EIN FAHRZEUG, FAHRZEUG MIT EINEM FAHRERASSISTENZSYSTEM UND VERFAHREN ZUM UNTERSTÜTZEN EINES FAHRERS BEIM FÜHREN EINES FAHRZEUGS**
DRIVER ASSISTANCE SYSTEM FOR A VEHICLE, VEHICLE WITH A DRIVER ASSISTANCE SYSTEM, AND METHOD FOR AIDING A DRIVER WHEN OPERATING A VEHICLE
SYSTÈME D'AIDE À LA CONDUITE D'UN VÉHICULE, VÉHICULE MUNI D'UN SYSTÈME D'AIDE À LA CONDUITE ET PROCÉDÉ POUR ASSISTER UN CONDUCTEUR DANS LA CONDUITE D'UN VÉHICULE

(30) Priorität: 25.09.2009 DE 102009048493
(43) Veröffentlichungstag der Anmeldung: 01.08.2012
(73) Patentinhaber: Valeo Schalter und Sensoren GmbH, 74321 Bietigheim-Bissingen (DE)
(72) Erfinder: REILHAC, Patrice, 73732 Esslingen (DE)
(74) Vertreter: Jauregui Urbahn, Kristian
(86) Internationale Anmeldenummer: PCT/EP2010/005766
(87) Internationale Veröffentlichungsnummer: WO 2011/035880

(56) Entgegenhaltungen:
- EP-A2- 1 580 092
- WO-A1-2006/063603
- DE-A1-102008 000 570

## Beschreibung

Die Erfindung betrifft ein Fahrerassistenzsystem für ein Fahrzeug. Das Fahrerassistenzsystem umfasst zumindest ein in das Fahrzeug eingebautes Steuergerät und/oder zumindest eine in das Fahrzeug eingebaute Sensoreinrichtung. Die Erfindung bezieht sich außerdem auf ein Fahrzeug mit einem solchen Fahrerassistenzsystem sowie auf ein Verfahren zum Unterstützen eines Fahrers beim Führen eines Fahrzeugs mit Hilfe eines Fahrerassistenzsystems, welches zumindest ein in das Fahrzeug eingebautes Steuergerät und/oder zumindest eine in das Fahrzeug eingebaute Sensoreinrichtung aufweist.

Moderne Fahrzeuge verfügen über Fahrerassistenzsysteme, die den Fahrer beim Führen des Fahrzeugs unterstützen. Die Fahrerassistenzsysteme umfassen in der Regel zumindest ein in das Fahrzeug eingebautes Steuergerät, welches zur Ansteuerung einer Komponente des Fahrzeugs - zum Beispiel einer Bremse und/oder eines Scheinwerfers und/oder einer Klimaanlage und/oder einer Lenkvorrichtung - dient. Fahrerassistenzsysteme können auch zumindest eine in das Fahrzeug werkseitig eingebaute Sensoreinrichtung aufweisen, die dann zum Erfassen von Daten über die Umgebung des Fahrzeugs dient. Zum Beispiel verfügen heutige Fahrerassistenzsysteme über Radargeräte, Ultraschallsensoren, Kameras und ähnliche Sensoreinrichtungen. In aktuellen Fahrzeugen kommunizieren Steuergeräte miteinander über verschiedene Kommunikationsbusse (CAN, LIN, MOST, Flexray). Auch die Sensoreinrichtungen übertragen die gewonnenen Daten über die Kommunikationsbusse. Um die Interoperabilität der verschiedenen Steuergeräte in den verschiedenen Varianten verschiedener Fahrzeugmodelle sicherzustellen, wird meist eine bestimmte Softwareausstattung für alle Steuergeräte vorgeschrieben. Ziel einer solchen einheitlichen Softwareausstattung ist eine zuverlässige Vernetzung und Integration aller Steuergeräte und aller Sensoreinrichtungen zu einem Gesamtsystem.

Die Ausstattungsvarianten eines Fahrzeugsmodells können sich in den Anwendungen unterscheiden, die durch die jeweiligen Fahrerassistenzsysteme bereitgestellt werden. Die durch die Fahrerassistenzsysteme bereitgestellten Anwendungen unterschiedlicher Ausstattungsvarianten können auch dann voneinander unterschiedlich sein, wenn in den unterschiedlichen Ausstattungsvarianten die gleichen Steuergeräte unter/oder die gleichen Sensoreinrichtungen eingesetzt werden. Zum Beispiel können verschiedene Ausstattungsvarianten mit der gleichen Frontkamera zum Erfassen eines Umgebungsbereichs vor dem Fahrzeug ausgestattet werden; die anhand der Bilddaten der Frontkamera durch die jeweiligen Fahrerassistenzsysteme bereitgestellten Anwendungen bzw. Funktionen können unterschiedlich sein. Und zwar kann in einer Ausstattungsvariante anhand der Bilddaten der Frontkamera eine solche Anwendung bereitgestellt werden, gemäß welcher der Fahrer vor einem Überfahren einer erkannten Fahrbahnmarkierung gewarnt wird, während in einer anderen Ausstattungsvariante eine solche Anwendung anhand der Bilddaten der Frontkamera bereitgestellt wird, gemäß welcher ein Schweinwerfer des Fahrzeugs abhängig von einem anhand der Bilddaten ermittelten Helligkeitsgrad der Umgebung angesteuert wird. Es ist für den Fahrer aufwändig, das Fahrerassistenzsystem seines Fahrzeugs nachträglich mit zusätzlichen Anwendungen aufzurüsten. Der Fahrer müsste dann eine neue Softwareversion auf den jeweiligen Steuergeräten und/oder den Sensoreinrichtungen installieren lassen bzw. die Steuergeräte und/oder die Sensoreinrichtungen entsprechend aufrüsten lassen. Es ist somit eine besondere Herausforderung, Maßnahmen zu treffen die es dem Fahrer ermöglichen, sein Fahrerassistenzsystem selbst - ohne Eingriff in die im Fahrzeug vorhandenen Steuergeräte und/oder die Sensoreinrichtungen - nachträglich auszugestalten.

Die Druckschrift DE 10 2004 008 867 A1 beschreibt ein Bildverarbeitungssystem für ein Fahrzeug. Das Bildverarbeitungssystem umfasst ein Kamerasystem, mit welchem Bilddaten über eine Umgebung des Fahrzeugs oder einen Innenraum aufgenommen werden können. Ein Kleinstcomputer - zum Beispiel ein Bildtelefon oder ein tragbarer Personalcomputer (Personal Digital Assistant) - übernimmt dabei die Verarbeitung der Bilddaten. Auf einem Bildschirm des Kleinstcomputers können Bilder angezeigt werden, die auf den gewonnenen Bilddaten beruhen. Das Bildverarbeitungssystem einschließlich des Kleinstcomputers und des Kamerasystems ist ein Teil eines in das Fahrzeug eingebauten Fahrerassistenzsystems.

Es ist Aufgabe der Erfindung, eine Lösung aufzuzeigen, wie ein Fahrer eines Fahrzeugs die Funktionalität eines in das Fahrzeug eingebauten Fahrerassistenzsystems ohne viel Aufwand erweitern kann.

Diese Aufgabe wird erfindungsgemäß durch ein Fahrerassistenzsystem mit den Merkmalen gemäß Patentanspruch 1, durch ein Fahrzeug mit den Merkmalen des Patentanspruchs 29 sowie durch ein Verfahren mit den Merkmalen gemäß Patentanspruch 30 gelöst. Vorteilhafte Ausführungen der Erfindung sind Gegenstand der abhängigen Patentansprüche und der Beschreibung.

Ein erfindungsgemäßes Fahrerassistenzsystem für ein Fahrzeug umfasst zumindest eine in das Fahrzeug eingebaute Sensoreinrichtung. Die Sensoreinrichtung kann zum Beispiel zur Aufnahme von Daten über eine Fahrzeugumgebung ausgebildet sein. Die zumindest eine Sensoreinrichtung weist eine Kommunikationsschnittstelle auf, über welche unter Umgehung eines fahrzeuginternen Datenübertragungssystems - zum Beispiel eines Fahrzeugbusses - Daten unmittelbar zwischen der Sensoreinrichtung und einem tragbaren Kommunikationsgerät zumindest in eine Richtung übertragbar sind, wobei durch die Datenübertragung das tragbare Kommunikationsgerät und die Sensoreinrichtung derart zusammenwirken, dass zumindest eine Funktion durchführbar ist, die einen Fahrer beim Führen des Fahrzeugs unterstützt.

Erfindungsgemäß ist somit vorgesehen, dass Daten zwischen der Sensoreinrichtung und einem tragbaren Kommunikationsgerät unabhängig von der Fahrzeugarchitektur - das heißt unabhängig von jeglichen, im Fahrzeug vorhandenen Datenübertragungssystemen - übertragen werden können. Zum Beispiel kann die zumindest eine Sensoreinrichtung außerdem noch an das fahrzeuginterne Datenübertragungssystem angeschlossen sein, so dass sie zusätzlich unter Umgehung dieses Datenübertragungssystems - nämlich über die zusätzliche Kommunikationsschnittstelle - mit dem tragbaren Kommunikationsgerät kommunizieren kann. Dies bedeutet, dass die zumindest eine Sensoreinrichtung auch ohne das tragbare Kommunikationsgerät funktionsfähig ist bzw. eine Funktion im Fahrerassistenzsystem bereitstellen kann, mit welcher der Fahrer beim Führen des Fahrzeugs unterstützt wird. Mit anderen Worten kann alleine durch die zumindest eine Sensoreinrichtung aufgrund einer Datenübertragung über das fahrzeuginterne Datenübertragungssystem eine Funktion zur Fahrerunterstützung bereitgestellt werden; die durch das Zusammenwirken des tragbaren Kommunikationsgeräts mit der zumindest einen Sensoreinrichtung durchführbare Funktion eine zusätzliche Funktion darstellt.

Bei der zumindest einen Sensoreinrichtung handelt es sich insbesondere um im Fahrzeug bereits werkseitig - das heißt bei der Auslieferung des Fahrzeugs - vorhandene Komponenten. Somit kann die zumindest eine Sensoreinrichtung nicht ohne Aufwand durch den Fahrer aus dem Fahrzeug wieder entnommen werden.

Die jeweilige Kommunikationsschnittstelle bei der zumindest einen Sensoreinrichtung kann bereits werkseitig vorhanden sein. Alternativ kann vorgesehen sein, dass die zumindest eine Sensoreinrichtung mit der jeweiligen Kommunikationsschnittstelle nachträglich aufgerüstet wird.

Das erfindungsgemäße Fahrerassistenzsystem ermöglicht es dem Fahrer, die Funktionalität des Fahrerassistenzsystems nachträglich ohne viel Aufwand selbstständig zu erweitern und das Fahrerassistenzsystem selbst auszugestalten. Der Fahrer braucht lediglich ein tragbares Kommunikationsgerät - zum Beispiel ein Mobiltelefon und/oder einen tragbaren Personalcomputer (Personal Digital Assistant). Er kann auf seinem tragbaren Kommunikationsgerät ein Computerprogramm installieren, bei dessen Ausführen Daten zwischen dem tragbaren Kommunikationsgerät und der zumindest einen Sensoreinrichtung übertragen werden, so dass der Fahrer beim Führen des Fahrzeugs unterstützt wird. Der Fahrer kann zum Beispiel unterschiedliche Programmcodes für unterschiedliche Zusatzfunktionen des Fahrerassistenzsystems aus dem Internet herunterladen und auf dem tragbaren Kommunikationsgerät installieren und ausführen. Durch das Bereitstellen einer Kommunikationsschnittstelle bei der Sensoreinrichtung werden die im Fahrzeug vorhandenen Datenübertragungssysteme nicht zusätzlich belastet. Die Kommunikation zwischen dem tragbaren Kommunikationsgerät und der Sensoreinrichtung erfolgt nämlich unmittelbar, vorzugsweise drahtlos.

Wie bereits ausgeführt, können über die Kommunikationsschnittstelle Daten unmittelbar zwischen der Sensoreinrichtung und einem Mobiltelefon und/oder einem tragbaren Personalcomputer (Personal Digital Assistant) übertragen werden. Der Fahrer braucht somit lediglich ein Mobiltelefon oder einen tragbaren Personalcomputer, um die Funktionalität seines Fahrerassistenzsystems zu erweitern. Er kann zum Beispiel das tragbare Kommunikationsgerät mit Hilfe einer Halterung an einer Windschutzscheibe des Fahrzeugs im Innenraum befestigen, so dass er auch eine Anzeigeeinrichtung des tragbaren Kommunikationsgerätes sehen kann. Mobiltelefone und tragbare Personalcomputer verfügen üblicherweise über Kommunikationsschnittstellen, die zur drahtlosen Kommunikation geeignet sind. Die zumindest eine Sensoreinrichtung muss somit lediglich mit einer entsprechenden Kommunikationsschnittstelle ausgestattet werden, um mit einem tragbaren Kommunikationsgerät Daten auszutauschen und mit diesen zusammenzuwirken. Außerdem sind Mobiltelefone, wie auch tragbare Personalcomputer in vielfältiger Ausgestaltung auf dem Markt erhältlich. Verfügt der Fahrer beispielsweise bereits über ein Mobiltelefon, so braucht er lediglich ein entsprechendes Computerprogramm, um durch das Zusammenwirken seines Mobiltelefons mit der Sensoreinrichtung beim Führen des Fahrtzeugs unterstützt zu werden.

Es hat sich als besonders vorteilhaft herausgestellt, wenn die Kommunikationsschnittstelle zur drahtlosen Übertragung ausgebildet ist. Dann kommt das Fahrerassistenzsystem ohne eine elektrische Verbindung zwischen der Sensoreinrichtung und dem tragbaren Kommunikationsgerät aus, das tragbare Kommunikationsgerät kann zum Beispiel mittels einer Halterung im Innenraum des Fahrzeugs montiert werden und mit einer außerhalb des Innenraums befindlichen - etwa an der Karosserie montierten - Sensoreinrichtung kommunizieren. Insbesondere kann die Kommunikationsschnittstelle die Daten gemäß einem Standard der IEEE-802.11-Familie (Wireless Local Area Network) und/oder gemäß einem Standard der IEEE-802.15-Familie (Bluetooth) senden und/oder empfangen. Diese Ausführungsform macht sich die Tatsache zunutze, dass tragbare Kommunikationsgeräte üblicherweise bereits über Kommunikationsschnittstellen verfügen, die zur Übertragung von Daten gemäß einem Standard der oben genannten Familien geeignet sind. Der Fahrer kann somit ein marktübliches tragbares Kommunikationsgerät verwenden.

Eine in das Fahrzeug eingebaute Sensoreinrichtung, die eine Kommunikationsschnittstelle aufweist, kann eine Frontkamera sein, die in einem Innenraum des Fahrzeugs hinter einer Windschutzscheibe platziert ist und zum Erfassen von Bilddaten über einen Umgebungsbereich vor dem Fahrzeug und zum Übertragen der Bilddaten an das tragbare Kommunikationsgerät ausgebildet ist. Die Kamera kann zum Beispiel vermittels einer Halterung an der Windschutzscheibe platziert sein, vorzugsweise unmittelbar unter einem Fahrzeughimmel. Die Kamera kann zum Beispiel einen Umgebungsbereich bis zu einer Distanz von 5 bis 20 Metern, insbesondere bis zu 10 Metern, vor dem Fahrzeug erfassen. Die Frontkamera ist bevorzugt eine Bilderfassungseinrichtung, die Licht in einem vom Menschen wahrnehmbaren Spektralbereich detektieren und so Bilder aufzeichnen kann. Die Frontkamera kann in CMOS-Technologie (komplementärer Metall-Oxid-Halbleiter) aufgebaut sein, so dass eine hohe Bildauflösung mit einer breiten Palette von Grautönen bereitgestellt werden kann. Durch den Einsatz der Frontkamera wird der Fahrer bevorzugt auch ohne ein tragbares Kommunikationsgerät unterstützt; mit dem tragbaren Kommunikationsgerät, welches mit der Frontkamera kommuniziert, können jedoch Zusatzfunktionen zur Fahrerunterstützung durchgeführt werden. Und zwar können durch das tragbare Kommunikationsgerät verschiedenste Zusatzfunktionen durchgeführt werden, nämlich unmittelbar durch das tragbare Kommunikationsgerät bereitgestellt werden und/oder unter Ansteuerung eines Steuergeräts des Fahrerassistenzsystems. Das tragbare Kommunikationsgerät kann dann nämlich die Bilddaten der Frontkamera verarbeiten; es kann zum Beispiel Bilder auf einer eigenen Anzeigeeinrichtung anzeigen, die auf den empfangenen Bilddaten beruhen. Das tragbare Kommunikationsgerät kann auch die Bilddaten der Frontkamera einer Mustererkennung unterziehen, um so ein Verkehrszeichen zu erkennen. Es ist auch möglich, abhängig von den Bilddaten der Frontkamera Fahrbahnmarkierungen zu erkennen und ein bevorstehendes oder ein bereits erfolgtes Überfahren einer erkannten Fahrbahnmarkierung durch das Fahrzeug festzustellen. Das tragbare Kommunikationsgerät kann zum Beispiel nach Feststellen eines bevorstehenden oder bereits erfolgten Überfahrens der erkannten Fahrbahnmarkierung ein Warnsignal ausgeben. Diese Ausführungsform hat weiterhin den Vorteil, dass das tragbare Kommunikationsgerät anhand der Bilddaten der Frontkamera ein vor dem Fahrzeug befindliches Hindernis erkennen und den Fahrer entsprechend informieren kann. Abhängig von einem Ergebnis einer Verarbeitung der Bilddaten der Frontkamera kann das tragbare Kommunikationsgerät auch Steuerdaten an ein Steuergerät des Fahrerassistenzsystems übertragen, um eine Komponente des Fahrzeugs anzusteuern. Also wird bei dieser Ausführungsform die Frontkamera als eine Sensoreinrichtung eingesetzt und mit einer Kommunikationsschnittstelle ausgestattet, über welche die Bilddaten an ein tragbares Kommunikationsgerät des Fahrers übertragen werden können.

Eine in das Fahrzeug eingebaute Sensoreinrichtung des Fahrerassistenzsystems kann ein Radargerät sein, welches zum Erfassen von Radardaten über einen Umgebungsbereich des Fahrzeugs und zum Übertragen der Radardaten an das tragbare Kommunikationsgerät ausgebildet ist, nämlich über seine Kommunikationsschnittstelle. Bei dieser Ausführungsform weist also das Fahrerassistenzsystem ein auch ohne das tragbare Kommunikationsgerät funktionsfähiges Radargerät als Sensoreinrichtung auf, welches mit einer Kommunikationsschnittstelle ausgestattet ist. Das Radargerät kann zum Beispiel in einem Eckbereich eines hinteren Stoßfängers des Fahrzeugs angebracht sein. Es können auch zwei Radargeräte vorgesehen sein, die jeweils in einem Eckbereich des hinteren Stoßfängers angeordnet sind und Radardaten über jeweilige Kommunikationsschnittstellen an das tragbare Kommunikationsgerät übertragen können. Das Radargerät erfasst insbesondere auch einen Totwinkelbereich des Fahrzeugs, das heißt einen für den Fahrer weder im Innenspiegel nach im Außenspiegel einsehbaren Umgebungsbereich des Fahrzeugs. Diese Ausführungsform hat diverse Vorteile: Das tragbare Kommunikationsgerät kann abhängig von den empfangenen Radardaten zum Beispiel Objekte im Umgebungsbereich des Fahrzeugs orten. Das tragbare Kommunikationsgerät kann zum Beispiel Bilder auf einer eigenen Anzeigeeinrichtung anzeigen, die auf den empfangenen Radardaten beruhen. Das tragbare Kommunikationsgerät kann Objekte im Totwinkelbereich des Fahrzeugs erkennen und den Fahrer entsprechend darüber informieren, dass sich ein das Fahrzeug überholendes Objekt im Totwinkelbereich befindet. Durch eine Verarbeitung der Radardaten kann das tragbare Kommunikationsgerät auch eine Geschwindigkeit und/oder eine Beschleunigung und/oder eine Bewegungsrichtung eines erkannten Objekts relativ zum Fahrzeug ermitteln und den Fahrer über die Geschwindigkeit und/oder die Beschleunigung und/oder die Bewegungsrichtung informieren.

In einer Ausführungsform weist das Fahrerassistenzsystem als Sensoreinrichtung einen in das Fahrzeug eingebauten und insbesondere auch ohne das tragbare Kommunikationsgerät funktionsfähigen Ultraschallsensor auf, welcher zum Erfassen von Ultraschalldaten über einen Umgebungsbereich des Fahrzeugs und zum Übertragen der Ultraschalldaten an das tragbare Kommunikationsgerät ausgebildet ist. Also kann eine Sensoreinrichtung ein Ultraschallsensor sein, der über seine Kommunikationsschnittstelle zum Übertragen von Ultraschalldaten an das tragbare Kommunikationsgerät des Fahrers verfügt. Anhand der Ultraschalldaten kann das tragbare Kommunikationsgerät verschiedenste Funktionen durchführen, die den Fahrer beim Führen des Fahrzeugs unterstützen. Und zwar kann das tragbare Kommunikationsgerät auf einer eigenen Anzeigeeinrichtung Bilder anzeigen, die auf den Ultraschalldaten beruhen. Zum Beispiel kann das tragbare Kommunikationsgerät auf der Anzeigeeinrichtung erkannte Hindernisse anzeigen. Der Ultraschallsensor ist bevorzugt an einer Seitenflanke des Fahrzeugs angeordnet, nämlich vorzugsweise in einem Randbereich eines vorderen Stoßfängers oder im Bereich eines Außenspiegels. Das Fahrerassistenzsystem kann auch zwei Ultraschallsensoren aufweisen, die jeweils an einer Seitenflanke des Fahrzeugs angebracht sind und Ultraschalldaten an das tragbare Kommunikationsgerät übertragen. Ein weiterer Vorteil dieser Ausführungsform besteht darin, dass das tragbare Kommunikationsgerät anhand der Ultraschalldaten den Fahrer beim Durchführen von Parkvorgängen unterstützen kann. Und zwar kann das tragbare Kommunikationsgerät eine Parkbahn abhängig von den Ultraschalldaten berechnen, entlang welcher das Fahrzeug in eine erkannte Parklücke eingeparkt werden kann. Das tragbare Kommunikationsgerät kann den Fahrer zum Beispiel darüber informieren, welche Lenkaktionen er auszuführen hat, um in die erkannte Parklücke einzuparken. Ergänzend oder alternativ kann das tragbare Gerät auch Steuerdaten an ein Steuergerät zur Ansteuerung einer Lenkvorrichtung übertragen, welches ein Teil des Fahrerassistenzsystems sein und eine Kommunikationsschnittstelle aufweisen kann. Das tragbare Kommunikationsgerät kann somit die lenkbaren Räder des Fahrzeugs lenken, so dass das Fahrzeug entlang der berechneten Parkbahn in die Parklücke eingeparkt werden kann.

Das Fahrerassistenzsystem kann als Sensoreinrichtung(en) zumindest eine an einer äußeren Oberfläche des Fahrzeugs angeordnete Kamera insbesondere eine Vielzahl von Kameras, umfassen, welche zum Erfassen von Bilddaten über einen Umgebungsbereich des Fahrzeugs und zum Übertragen der Bilddaten an das tragbare Kommunikationsgerät ausgebildet ist/sind. Die Kameras dienen also bei dieser Ausführungsform zum Erfassen der Umgebung um das Fahrzeug herum; sie können jeweils einen Erfassungsbereich aufweisen, dessen Öffnungswinkel etwa 180° beträgt, so dass mit lediglich vier Kameras die gesamte Umgebung des Fahrzeugs - ein 360°-Bild - erfasst werden kann. Eine solche Kamera kann zum Beispiel am vorderen Stoßfänger des Fahrzeugs, eine Kamera am hinteren Stoßfänger des Fahrzeugs, eine Kamera an der linken Seitenflanke und eine Kamera an der rechten Seitenflanke angeordnet sein. Diese Ausführungsform sorgt dafür, dass der Fahrer über die gesamte Umgebung des Fahrzeugs informiert wird, und zwar auch über diejenigen Umgebungsbereiche des Fahrzeugs, die er selbst weder im Außenspiegel noch im Innenspiegel sehen kann. Und zwar kann das tragbare Kommunikationsgerät auf einer eigenen Anzeigeeinrichtung Bilder anzeigen, die auf den empfangenen Bilddaten beruhen. Der Fahrer muss sich dann zum Beispiel beim Durchführen eines schwierigen Parkvorgangs nicht einer Hilfsperson bedienen, um den Parkvorgang erfolgreich durchzuführen; das tragbare Kommunikationsgerät kann den Fahrer nämlich über die Situation in der Fahrzeugumgebung informieren, nämlich abhängig von den Bilddaten der Kameras.

Das Fahrerassistenzsystem kann als Steuergerät ein in das Fahrzeug eingebautes Bremssteuergerät aufweisen. Dann ist ein in das Fahrzeug eingebautes Steuergerät ein Bremssteuergerät, welches eine Kommunikationsschnittstelle zur Kommunikation mit einem tragbaren Kommunikationsgerät des Fahrers aufweist. Das Bremssteuergerät kann dazu ausgelegt sein, über seine Kommunikationsschnittstelle Steuerdaten unmittelbar von dem tragbaren Kommunikationsgerät zu empfangen und abhängig von den Steuerdaten ein Bremssystem des Fahrzeugs anzusteuern. Diese Ausführungsform hat den Vorteil, dass ein Mobiltelefon und/oder ein tragbarerer Personalcomputer des Fahrers unmittelbar in das Bremssystem des Fahrzeugs eingreifen können, nämlich unter Übertragung der Steuerdaten. Zum Beispiel können das Mobiltelefon und/oder der tragbare Personalcomputer anhand von Bilddaten einer Frontkamera ein bevorstehendes oder ein bereits erfolgtes Überfahren einer Fahrbahnmarkierung durch das Fahrzeug feststellen und das Bremssystem nach Feststellen des bevorstehenden oder bereits erfolgten Überfahrens der Fahrbahnmarkierung betätigen. Zum Beispiel kann das tragbare Kommunikationsgerät des Fahrers eine Verzögerung des Fahrzeugs kleiner als 0,3 G bewirken, um den Fahrer vor einem möglichen Überfahren der Fahrbahnmarkierung zu warnen.

Ein in das Fahrzeug eingebautes Steuergerät kann ein Scheinwerfer-Steuergerät sein, das dazu ausgelegt ist, über seine Kommunikationsschnittstelle Steuerdaten unmittelbar von dem tragbaren Kommunikationsgerät zu empfangen und abhängig von den Steuerdaten einen Scheinwerfer des Fahrzeugs anzusteuern. Diese Ausführungsform sorgt dafür, dass das tragbare Kommunikationsgerät des Fahrers - zum Beispiel abhängig von einem Ergebnis einer Verarbeitung von Bilddaten einer Frontkamera - unmittelbar den Schweinwerfer des Fahrzeugs ansteuern kann, nämlich unter Übertragung von Steuerdaten an das Scheinwerfer-Steuergerät. Somit kann durch das tragbare Kommunikationsgerät des Fahrers eine Funktion durchgeführt werden, gemäß welcher der Scheinwerfer des Fahrzeugs automatisch angesteuert wird, nämlich zum Beispiel abhängig von Bilddaten einer Frontkamera.

Ein in das Fahrzeug eingebautes Steuergerät kann ein Lenksteuergerät sein, das dazu ausgelegt ist, über seine Kommunikationsschnittstelle Steuerdaten unmittelbar von dem tragbaren Kommunikationsgerät zu empfangen und abhängig von den Steuerdaten eine Lenkvorrichtung des Fahrzeugs anzusteuern und somit die lenkbaren Räder des Fahrzeugs zu lenken. Bei dieser Ausführungsform kann also das tragbare Kommunikationsgerät des Fahrers Steuerdaten an das Lenksteuergerät übertragen und somit die lenkbaren Räder des Fahrzeugs lenken bzw. die Fahrbahn des Fahrzeugs steuern. Diese Ausführungsform erweist sich insbesondere beim Unterstützen des Fahrers beim Durchführen von Parkvorgängen besonders vorteilhaft. Das tragbare Kommunikationsgerät kann zum Beispiel abhängig von Ultraschalldaten eine Parkbahn berechnen und das Lenksteuergerät derart ansteuern, dass das Fahrzeug entlang der berechneten Parkbahn in eine Parklücke eingeparkt wird.

Das Fahrerassistenzsystem kann ein Bildschirm-Steuergerät umfassen. Dann ist ein in das Fahrzeug eingebautes Steuergerät ein Bildschirm-Steuergerät. Das Bildschirm-Steuergerät kann dazu ausgelegt sein, über seine Kommunikationsschnittstelle Bilddaten unmittelbar von dem tragbaren Kommunikationsgerät zu empfangen und Bilder auf einem Bildschirm des Fahrerassistenzsystems anzuzeigen, die auf den empfangenen Bilddaten beruhen. Somit kann das tragbare Kommunikationsgerät des Fahrers auch Bilder auf einem im Innenraum des Fahrzeugs befindlichen Bildschirm anzeigen, die zum Beispiel auf Bilddaten einer Kamera beruhen. Dies ist dann besonders vorteilhaft, wenn ein eigenes Display des tragbaren Kommunikationsgeräts klein ist und das Fahrzeug über einen zusätzlichen Bildschirm zum Beispiel an der Instrumententafel verfügt. Ein weiterer Vorteil dieser Ausführungsform besteht darin, dass das tragbare Kommunikationsgerät des Fahrers keine eigene Anzeigeeinrichtung umfassen kann, es kann die Bilddaten an das in das Fahrzeug eingebaute Bildschirm-Steuergerät übertragen und Bilder auf dem Bildschirm des Fahrerassistenzsystems anzeigen.

Ein in das Fahrzeug eingebautes Steuergerät kann ein Bildprojektor-Steuergerät sein, welches zur Ansteuerung eines Bildprojektors dient, mittels welchem Bilder mit Informationen auf eine Windschutzscheibe des Fahrzeugs projizierbar sind (ein so genanntes Head-Up-Display). Das Bildprojektor-Steuergerät umfasst dann eine Kommunikationsschnittstelle, über welche es Steuerdaten unmittelbar vor dem tragbaren Kommunikationsgerät empfangen kann. Das tragbare Kommunikationsgerät kann dann Steuerdaten an das Bildprojektor-Steuergerät übermitteln, um den Bildprojektor anzusteuern. Somit können wichtige Informationen direkt in das Blickfeld des Fahrers gebracht werden, wie insbesondere die jeweils aktuelle Geschwindigkeit des Fahrzeugs, Bilder mit Navigationshinweisen, wie auch Warnungen - etwa Spurverlassungswarnungen. All diese Informationen können auf die Windschutzscheibe projiziert werden, so dass der Fahrer von der Straßensituation nicht abgelenkt wird.

In einer Ausführungsform umfasst das Fahrerassistenzsystem das tragbare Kommunikationsgerät, so dass das tragbare Kommunikationsgerät ein Teil des Fahrerassistenzsystems ist.

Das tragbare Kommunikationsgerät kann dann dazu ausgelegt sein, Bilddaten über einen Umgebungsbereich vor dem Fahrzeug unmittelbar von einer Frontkamera zu empfangen, sie zu verarbeiten und abhängig von einem Ergebnis der Verarbeitung eine Funktion durchzuführen - nämlich selbst bereitzustellen und/oder ein in das Fahrzeug eingebautes Steuergerät anzusteuern -, die den Fahrer beim Führen des Fahrzeugs unterstützt. Das tragbare Kommunikationsgerät kann eine Anzeigeeinrichtung - zum Beispiel einen Bildschirm bzw. ein Display - aufweisen und Bilder auf der Anzeigeeinrichtung anzeigen, die auf den Bilddaten beruhen. Somit können dem Fahrer Bilder über den Umgebungsbereich vor dem Fahrzeug angezeigt werden. Somit kann der Fahrer zum Beispiel Hindernisse erkennen, die sich im Umgebungsbereich vor dem Fahrzeug befinden. Es kann auch vorgesehen sein, dass das tragbare Kommunikationsgerät dazu ausgelegt ist, Steuerdaten an ein Bildschirm-Steuergerät des Fahrzeugs zu übertragen und hierdurch einen fahrzeuginternen Bildschirm anzusteuern. Dann empfängt das tragbare Kommunikationsgerät Bilddaten von der Frontkamera, verarbeitet sie und sendet Steuerdaten an das Bildschirm-Steuergerät, das dann auf dem Bildschirm auf den Steuerdaten beruhende Bilder anzeigt.

Das tragbare Kommunikationsgerät kann zum Erkennen eines Verkehrszeichens die empfangenen Bilddaten einer Mustererkennung unterziehen, um so ein Verkehrszeichen zu erkennen. Erkennt das tragbare Kommunikationsgerät ein Verkehrszeichen, so kann das Kommunikationsgerät ein das erkannte Verkehrszeichen wiedergebendes Bild auf einer Anzeigeeinrichtung - sei es auf einer eigenen oder einer externen Anzeigeeinrichtung - anzeigen und/oder ein dem erkannten Verkehrszeichen zugeordnetes bzw. das Verkehrszeichen charakterisierendes akustisches Signal ausgeben, nämlich mit Hilfe eines in das tragbare Kommunikationsgerät eingebauten Lautsprechers. Somit kann dem Fahrer in seinem Fahrzeug als Funktion die Verkehrszeichenerkennung bereitgestellt werden, ohne dass das Fahrzeug werkseitig zum Bereitstellen einer solchen Funktion ausgebildet ist. Es genügt lediglich eine in das Fahrzeug werkseitig eingebaute Frontkamera, die Bilddaten über den Umgebungsbereich vor dem Fahrzeug erfasst und an das tragbare Kommunikationsgerät übermittelt.

Das tragbare Kommunikationsgerät kann abhängig von empfangenen Bilddaten Fahrbahnmarkierungen erkennen, ein bevorstehendes oder ein bereits erfolgtes Überfahren einer erkannten Fahrbahnmarkierung durch das Fahrzeug feststellen und nach Feststellen eines bevorstehenden oder bereits erfolgten Überfahrens der erkannten Fahrbahnmarkierung ein Warnsignal ausgeben, welches den Fahrer vor dem bevorstehenden oder erfolgten Überfahren der Fahrbahnmarkierung warnt. Also kann mit Bilddaten der in das Fahrzeug werkseitig eingebauten Kamera und mit einem entsprechenden Computerprogramm auf dem tragbaren Kommunikationsgerät ein Spurverlassenswarner geschaffen werden, welcher nicht bei jeder Ausstattungsvariante eines Fahrzeugmodells vorhanden sein kann. Mit dem Warnsignal kann zum Beispiel ein Lautsprecher angesteuert werden, so dass der Fahrer auf akustischem Wege vor dem bevorstehenden oder erfolgten Überfahren der Fahrbahnmarkierung gewarnt wird. Ergänzend oder alternativ kann mit dem Warnsignal ein weiteres Steuergerät - das in das Fahrzeug eingebaut ist - angesteuert werden, nämlich beispielsweise ein Bremssteuergerät zur automatischen Betätigung eines Bremssystems des Fahrzeugs. Dann überträgt das tragbare Kommunikationsgerät Daten mit dem Warnsignal an das Bremssteuergerät; das Bremssteuergerät greift in das Bremssystem ein und warnt somit den Fahrer vor dem bevorstehenden oder erfolgten Überfahren der Fahrbahnmarkierung.

Das tragbare Kommunikationsgerät kann dazu ausgelegt sein, abhängig von den Bilddaten ein Hindernis, insbesondere einen Fußgänger, zu erkennen und nach Erkennen eines Hindernisses ein Signal auszugeben, welches den Fahrer über das erkannte Hindernis informiert. Dies erhöht die Sicherheit.

Abhängig von den empfangenen Bilddaten über den Umgebungsbereich vor dem Fahrzeug kann das tragbare Kommunikationsgerät auch weitere Funktionen durchführen. Zum Beispiel kann das tragbare Kommunikationsgerät dazu ausgelegt sein, abhängig von den Bilddaten einen Nebel und/oder einen Helligkeitsgrad der Umgebung und/oder einen Scheinwerfer bzw. Licht eines Gegenverkehrs und/oder eine Rückleuchte eines vorausfahrenden Fahrzeugs zu erkennen und abhängig davon eine Funktion durchzuführen, die den Fahrer beim Führen des Fahrzeugs unterstützt. Insbesondere kann das tragbare Kommunikationsgerät abhängig von einem erkannten Nebel und/oder abhängig von dem Helligkeitsgrad der Umgebung und/oder abhängig von einem erkannten Scheinwerfer eines Gegenverkehrs und/oder abhängig von einer erkannten Rückleuchte eines vorausfahrenden Fahrzeugs Steuerdaten an ein in das Fahrzeug eingebautes Scheinwerfer-Steuergerät des Fahrerassistenzsystems übertragen und hierdurch ein Scheinwerfer des Fahrzeugs ansteuern. Somit kann dem Fahrer in seinem Fahrzeug ein Lichtassistenzsystem als Funktion bereitgestellt werden.

Das tragbare Kommunikationsgerät kann dazu ausgelegt sein, Bilddaten unmittelbar von einer Vielzahl von an einer äußeren Oberfläche des Fahrzeugs angeordneten Kameras zu empfangen, die Bilddaten aller Kameras zu verarbeiten und abhängig von einem Ergebnis der Verarbeitung eine Funktion durchzuführen, die den Fahrer beim Führen des Fahrzeugs unterstützt. Somit wird der Fahrer über die Situation in der gesamten Umgebung des Fahrzeugs informiert, nämlich insbesondere direkt durch das tragbare Kommunikationsgerät. Dies kann zum Beispiel beim Unterstützen des Fahrers beim Durchführen von Parkvorgängen besonders nützlich sein.

Das tragbare Kommunikationsgerät kann eine Anzeigeeinrichtung umfassen und Bilder auf der Anzeigeeinrichtung anzeigen, die auf den empfangenen Bilddaten der außerhalb des Innenraums des Fahrzeugs befindlichen Kameras beruhen. Zum Beispiel kann der Fahrer solche Bilder auf der Anzeigeeinrichtung angezeigt bekommen, die unter Verzicht auf eine Bildverarbeitung durch das tragbare Kommunikationsgerät direkt den durch zumindest eine der Kameras aufgenommenen Bildern entsprechen. Der Fahrer kann somit einen Umgebungsbereich des Fahrzeugs sehen, ohne sich ständig umdrehen zu müssen.

Das tragbare Kommunikationsgerät kann einen Beschleunigungssensor und/oder einen Kompass und/oder ein Navigationssystem - zum Beispiel mit einem GPS-Empfänger und/oder Galileo-Empfänger - aufweisen und abhängig von den Messwerten des Beschleunigungssensors und/oder von Daten des Navigationssystems einen Bereich eines durch die Kameras erfassbaren Gesamtumgebungsbereichs auswählen und auf einer Anzeigeeinrichtung Bilder über den ausgewählten Bereich anzeigen. Abhängig von den Messwerten des Beschleunigungssensors und/oder des Kompasses kann das tragbare Kommunikationsgerät nämlich zum Beispiel eine Richtung erkennen, in welche der Fahrer mit dem Fahrzeug abbiegt oder abbiegen möchte. Aus den Daten eines Navigationssystems kann das tragbare Kommunikationsgerät zum Beispiel Rückschlüsse darüber ziehen, ob sich das Fahrzeug augenblicklich auf einer Kreuzung befindet oder ob eine Durchfahrt durch eine Kreuzung bevorsteht. Das tragbare Kommunikationsgerät kann auf der Anzeigeeinrichtung zum Beispiel Bilder über einen Umgebungsbereich links des Fahrzeugs dann anzeigen, wenn festgestellt wird, dass der Fahrer rechts abbiegen möchte. Gemäß einem weiteren Beispiel kann das tragbare Kommunikationsgerät Bilder über den Umgebungsbereich hinter dem Fahrzeug anzeigen, wenn anhand der Messwerte des Beschleunigungssensors eine Rückfahrt des Fahrzeugs erkannt wird. Bei dieser Ausführungsform kann vor der Inbetriebnahme des tragbaren Kommunikationsgeräts zunächst eine Kalibrierung durchgeführt werden, so dass die Orientierung des tragbaren Kommunikationsgeräts im Fahrzeug berücksichtigt wird. Ergänzend oder alternativ kann diese Funktion nur dann freigegeben werden, wenn das tragbare Kommunikationsgerät an einer Halterung - zum Beispiel an der Windschutzscheibe des Fahrzeugs - befestigt wird. Dann ist nämlich sichergestellt, dass die Orientierung des tragbaren Kommunikationsgeräts im Fahrzeug vorgegeben und somit bekannt ist. Es kann auch vorgesehen sein - wenn das tragbare Kommunikationsgerät einen Beschleunigungssensor umfasst -, dass das tragbare Kommunikationsgerät selbst seine Orientierung im Raum auf der Basis von Messwerten des Beschleunigungssensors bestimmen und sich somit selbst kalibrieren kann.

In einer Ausführungsform ist das tragbare Kommunikationsgerät dazu ausgelegt, durch Verarbeitung der Bilddaten der Kameras solche Bilddaten zu berechnen, die eine Darstellung einer Draufsicht auf zumindest einen Bereich eines durch die Kameras erfassbaren Gesamtumgebungsbereichs beinhalten. Das tragbare Kommunikationsgerät kann dabei solche Bilddaten berechnen, die eine Darstellung einer Draufsicht auf das Fahrzeug und einen Bereich der Fahrzeugumgebung beinhalten. Ein Umgebungsbereich des Fahrzeugs, insbesondere ein durch den Fahrer nicht einsehbarer Umgebungsbereich des Fahrzeugs, kann also dem Fahrer auf der Anzeigeeinrichtung des tragbaren Kommunikationsgeräts aus einer Vogelperspektive angezeigt werden. Eine solche Draufsicht auf das Fahrzeug und seinen Umgebungsbereich ist besonders benutzerfreundlich, der Fahrer kann somit besonders einfach auf die Abstände zwischen dem Fahrzeug und jeglichen, im Umgebungsbereich befindlichen Objekten zurückschließen bzw. eine kritische Situation erkennen. Zum Beispiel beim Durchführen von Parkvorgängen kann eine solche Vogelperspektive nützlich sein; der Fahrer kann nämlich aus der Darstellung der Draufsicht die Orientierung des Fahrzeugs in Bezug auf Objekte, die sich neben dem Fahrzeug befinden, erkennen und so einen Parkvorgang zuverlässig abschließen.

Das tragbare Kommunikationsgerät kann dazu ausgelegt sein, abwechselnd Bilder der Vielzahl von Kameras anzuzeigen. Dann bekommt der Fahrer abwechselnd Bilder unterschiedlicher Umgebungsbereiche des Fahrzeugs angezeigt, und er kann sich über die gesamte Umgebung des Fahrzeugs näher informieren, ohne dass das tragbare Kommunikationsgerät eine aufwändige Verarbeitung der Bilddaten vornehmen muss.

Das tragbare Kommunikationsgerät kann dazu ausgelegt sein, Radardaten über einen Umgebungsbereich des Fahrzeugs unmittelbar von einem Radargerät zu empfangen, sie zu verarbeiten und abhängig von einem Ergebnis der Verarbeitung eine Funktion durchzuführen, die den Fahrer beim Führen des Fahrzeugs unterstützt. Zum Beispiel kann das tragbare Kommunikationsgerät auf seiner Anzeigeeinrichtung Bilder anzeigen, die auf den empfangenen Radardaten beruhen. Das tragbare Kommunikationsgerät kann auf seiner Anzeigeeinrichtung Hindernisse hervorheben und/oder den Fahrer über erkannte Hindernisse mittels akustischer Signale informieren.

In einer Ausführungsform kann das tragbare Kommunikationsgerät Ultraschalldaten über einen Umgebungsbereich des Fahrzeugs unmittelbar von einem in das Fahrzeug eingebauten Ultraschallsensor empfangen, sie verarbeiten und abhängig von einem Ergebnis der Verarbeitung eine Funktion durchführen, die den Fahrer beim Führen des Fahrzeugs unterstützt. Auch bei dieser Ausführungsform kann das Fahrerkommunikationsgerät Bilder auf seiner Anzeigeeinrichtung anzeigen, die auf den Ultraschalldaten beruhen. Das tragbare Kommunikationsgerät kann auch dazu ausgelegt sein, Parklücken anhand der Ultraschalldaten zu detektieren und den Fahrer beim Einparken des Fahrzeugs in eine erkannte Parklücke zu unterstützen. Und zwar kann das tragbare Kommunikationsgerät eine Parkbahn berechnen, die durch das Fahrzeug zum Erreichen einer Endposition in einer erkannten Parklücke befahren werden soll. Das tragbare Kommunikationsgerät kann auch Steuerdaten an ein in das Fahrzeug eingebautes Lenksteuergerät übertragen, um die lenkbaren Räder des Fahrzeugs zu lenken. Somit kann dem Fahrer ein semi-autonomes Parkhilfesystem bereitgestellt werden, bei welchem der Fahrer lediglich Gas geben und bremsen muss um das Fahrzeug in eine Parklücke einzuparken. Die Lenkung der lenkbaren Räder des Fahrzeugs kann das tragbare Kommunikationsgerät übernehmen.

Das tragbare Kommunikationsgerät kann dazu ausgelegt sein, von einem Radargerät empfangene Radardaten und von einem Ultraschallsensor empfangene Ultraschalldaten und/oder die Radardaten und von einer Kamera empfangene Bilddaten und/oder die Ultraschalldaten und die Bilddaten miteinander zu kombinieren. Somit kann durch das tragbare Kommunikationsgerät eine Plausibilitätskontrolle der Radardaten und/oder der Ultraschalldaten und/oder der Bilddaten durchgeführt werden. Es wird somit möglich, die auf den Radardaten und/oder den Ultraschalldaten und/oder den Bilddaten beruhenden Funktionen zuverlässig und höchst genau bereitzustellen. Für eine Plausibilitätskontrolle kann das tragbare Kommunikationsgerät auch Messwerte eines eigenen Beschleunigungssensors und/oder Daten eines eigenen Navigationssystems verwenden.

Das tragbare Kommunikationsgerät umfasst in einer Ausführungsform einen Beschleunigungssensor und/oder einen Kompass und/oder ein Navigationssystem - zum Beispiel mit einem GPS-Empfänger und/oder Galileo-Empfänger. Das tragbare Kommunikationsgerät kann dann abhängig von Messwerten des Beschleunigungssensors und/oder des Kompasses und/oder von Daten des Navigationssystems eine Funktion durchführen, die den Fahrer beim Führen des Fahrzeugs unterstützt.

Also kann das tragbare Kommunikationsgerät einen Beschleunigungssensor umfassen, der zum Messen einer Beschleunigung des tragbaren Kommunikationsgeräts ausgebildet ist. Das tragbare Kommunikationsgerät kann dazu ausgelegt sein, abhängig von den Messwerten für die Beschleunigung eine Funktion durchzuführen, die den Fahrer beim Führen des Fahrzeugs unterstützt. Die Funktion kann das tragbare Kommunikationsgerät selbst bereitstellen und/oder ein Steuergerät des Fahrzeugs ansteuern, das dann die Funktion bereitstellt. Also werden in einer Ausführungsform Messwerte eines in das tragbare Kommunikationsgerät eingebauten Beschleunigungssensors zur Unterstützung des Fahrers beim Führen des Fahrzeugs verwendet. Diese Ausführungsform macht sich die Tatsache zunutze, dass manche, auf dem Markt erhältliche tragbare Kommunikationsgeräte - wie zum Beispiel Mobiltelefone - bereits über einen eingebauten Beschleunigungssensor verfügen. Sie beruht auf der Erkenntnis, dass auf der Basis der Messwerte des Beschleunigungssensors eine Funktion durchgeführt werden kann, die den Fahrer beim Führen seines Fahrzeugs unterstützt. Diese Ausführungsform hat den Vorteil, dass Informationen über die Beschleunigung des Fahrzeugs sowie Informationen über einen aus der Beschleunigung ermittelbaren Fahrzustand des Fahrzeugs nicht an einem Kommunikationsbus des Fahrzeugs abgegriffen werden müssen, geschweige denn kommuniziert das tragbare Kommunikationsgerät mit den Steuergeräten und/oder Sensoreinrichtungen und nicht mit einem Kommunikationsbus des Fahrzeugs. Das tragbare Kommunikationsgerät verwendet die Messwerte seines eigenen Beschleunigungssensors und kann abhängig von den Messwerten den Fahrer beim Führen des Fahrzeugs unterstützen. Dies ermöglicht zum Beispiel die Ermittlung verschiedenster Fahrzustände des Fahrzeugs. Und zwar ermöglicht dies beispielsweise die Feststellung, ob der Fahrer mit seinem Fahrzeug durch eine Linkskurve oder auch eine Rechtskurve fährt. Als weiteres Beispiel sei hier die Möglichkeit erwähnt, anhand der Messwerte des Beschleunigungssensors einen Verlauf einer durch das Fahrzeug zurückgelegten Fahrbahn zu bestimmen.

Der Beschleunigungssensor ist bevorzugt ein dreidimensionaler Beschleunigungssensor. Dies bedeutet, dass mit dem Beschleunigungssensor die Beschleunigung des tragbaren Kommunikationsgeräts in alle drei Richtungen eines kartesischen Koordinatensystems gemessen werden kann. Somit ist die Verteilung der Beschleunigungskräfte im Koordinatensystem bekannt. Das tragbare Kommunikationsgerät kann somit bevorzugt nicht nur eine Beschleunigung des Fahrzeugs nach vorne oder eine Verzögerung des Fahrzeugs erfassen, sondern auch eine Querbeschleunigung und/oder eine Beschleunigung in vertikaler Richtung.

Das tragbare Kommunikationsgerät kann auf der Basis der Messwerte des Beschleunigungssensors unterschiedlichste Funktionen durchführen, die den Fahrer beim Führen des Fahrzeugs unterstützen. Zum Beispiel kann es abhängig von den Messwerten des Beschleunigungssensors ein Fahrverhalten des Fahrers bestimmen und den Fahrer über sein Fahrverhalten informieren. Dies kann zum Beispiel so aussehen, dass in dem tragbaren Kommunikationsgerät eine Vielzahl von vorbestimmten Wertebereichen abgelegt sind und das tragbare Kommunikationsgerät überprüft, in welchen der vorbestimmten Wertebereiche die jeweils momentanen Messwerte des Beschleunigungssensors fallen. Jeder Wertebereich kann dann einem bestimmten Fahrverhalten des Fahrers zugeordnet sein; relativ kleine Messwerte des Beschleunigungssensors können zum Beispiel einem "ökonomischen" Fahrverhalten zugeordnet sein, während mittlere Messwerte einem "normalen" Fahrverhalten und relativ hohe Messwerte einem "sportlichen" Fahrverhalten zugeordnet werden können. Der Fahrer kann durch das tragbare Kommunikationsgerät über sein Fahrverhalten informiert werden, und er kann sein Fahrverhalten anpassen bzw. verändern. Er kann dabei zum Beispiel den Kraftstoffverbrauch berücksichtigen, der üblicherweise von dem Fahrverhalten eines Fahrers abhängt.

Prinzipiell kann das tragbare Kommunikationsgerät den Fahrer über sein Fahrverhalten auf unterschiedliche Arten informieren. Zum Beispiel kann das tragbare Kommunikationsgerät den Fahrer über sein Fahrverhalten auf akustischem Wege informieren, nämlich unter Ausgabe entsprechender akustischer Signale, die das Fahrverhalten des Fahrers charakterisieren. Es hat sich als besonders vorteilhaft herausgestellt, wenn das tragbare Kommunikationsgerät abhängig von dem Fahrverhalten des Fahrers die Farbgebung einer Beleuchtung, insbesondere einer Hintergrundbeleuchtung, einer Anzeigeeinrichtung des tragbaren Kommunikationsgeräts verändert. Dem "konomische" Fahrverhalten kann dabei eine grüne Beleuchtung zugeordnet sein, während dem "normalen" Fahrverhalten eine blaue Beleuchtung und dem "sportlichen" Fahrverhalten eine rote Beleuchtung der Anzeigeeinrichtung zugeordnet sein können. Somit kann der Fahrer unmittelbar anhand der Farbgebung der Anzeigeeinrichtung erkennen, wie sein aktuelles Fahrverhalten ist bzw. ob sein aktuelles Fahrverhalten richtig ist oder nicht.

Bei der Bestimmung des Fahrverhaltens kann das tragbare Kommunikationsgerät die gemessene Beschleunigung auch über eine vorbestimmte Zeitdauer auswerten und abhängig von dieser Auswertung den Fahrer über sein Fahrverhalten entsprechend informieren. Zum Beispiel kann die Beschleunigung über eine vorbestimmte Zeitdauer gemittelt werden. Dann kann das tragbare Kommunikationsgerät überprüfen, in welchen Wertebereich die gemittelte Beschleunigung fällt. Somit wird erreicht, dass die Farbgebung der Beleuchtung nicht ständig verändert und/oder der Fahrer anderweitig über einen häufigen Wechsel seines Fahrverhaltens nicht zu oft informiert werden muss.

Eine durch das tragbare Kommunikationsgerät auf der Basis der Messwerte des Beschleunigungssensors durchführbare Funktion zur Fahrerunterstützung kann eine Unfallerkennung sein. Das Kommunikationsgerät kann eine Kommunikationsverbindung zwischen dem tragbaren Kommunikationsgerät und einer Notrufzentrale dann herstellen, wenn ein auf die Messwerte des Beschleunigungssensors bezogenes vorbestimmtes Notrufkriterium erfüllt ist. Das vorbestimmte Notrufkriterium kann dabei beinhalten, dass zumindest ein Messwert des Beschleunigungssensors einen vorbestimmten Grenzwert überschreitet und/oder die gemessene Beschleunigung eine vorbestimmte Änderung durchläuft bzw. eine vorbestimmte Charakteristik aufweist. Überschreitet ein Messwert des Beschleunigungssensors betragsmäßig einen Grenzwert und/oder durchläuft die Beschleunigung eine vorbestimmte Änderung, so kann dies nämlich ein Zeichen dafür sein, dass ein Unfall stattfindet oder stattzufinden droht. Die vorbestimmte Änderung bzw. die Charakteristik der Beschleunigung kann zum Beispiel einen Sprung umfassen - dann umfasst das Notrufkriterium, dass ein Messwert der Beschleunigung betragsmäßig sehr groß ist bzw. einen Grenzwert überschreitet und ein nachfolgender Messwert der Beschleunigung sehr klein ist, insbesondere Null beträgt. Das Notrufkriterium kann ergänzend oder alternativ beinhalten, dass sich das tragbare Kommunikationsgerät und somit auch das Fahrzeug nach Durchlaufen einer vorbestimmten Änderung - insbesondere einer sprunghaften Änderung - durch die Beschleunigung nicht mehr bewegt. Eine solche Information kann zum Beispiel anhand von Messwerten des Beschleunigungssensors und/oder von Daten eines Navigationssystems gewonnen werden. Ergänzend oder alternativ kann das vorbestimmte Notrufkriterium beinhalten, dass das tragbare Kommunikationsgerät eine vorbestimmte Orientierung im Raum aufweist - was anhand der Messwerte des Beschleunigungssensors ermittelt werden kann. Durch die Herstellung der Kommunikationsverbindung zwischen dem tragbaren Kommunikationsgerät und einer Notrufzentrale wird dem Fahrer die Möglichkeit gegeben, jemanden sehr schnell über den Unfall zu informieren. Ergänzend oder alternativ kann das tragbare Kommunikationsgerät Daten an die Notrufzentrale übertragen, so dass die Notrufzentrale quasi automatisch durch das tragbare Kommunikationsgerät über den Unfall informiert wird.

Eine durch das tragbare Kommunikationsgerät auf der Basis der Messwerte des Beschleunigungssensors durchführbare Funktion kann eine Beladungserkennung des Fahrzeugs sein. Das tragbare Kommunikationsgerät kann bei dieser Ausführungsform abhängig von den Messwerten des Beschleunigungssensors eine Beladung des Fahrzeugs und/oder eine Verteilung der Beladung im Fahrzeug bestimmen und den Fahrer über die Beladung und/oder über die Verteilung der Beladung informieren. Das tragbare Kommunikationsgerät kann - wenn es mit entsprechenden Sensoreinrichtungen und/oder Steuergeräten unmittelbar kommuniziert - bei der Bestimmung der Beladung und/oder der Verteilung der Beladung im Fahrzeug auch weitere fahrzeugspezifische Informationen berücksichtigen, nämlich insbesondere einen Lenkwinkel und/oder einen Federweg eines Stoßdämpfers des Fahrzeugs. Abhängig von dem Verhalten des Fahrzeugs bei einer Kurvenfahrt und/oder abhängig von einer Verteilung der Beschleunigungskräfte - insbesondere von einer Beschleunigung in vertikaler Richtung - lässt sich nämlich die Beladung des Fahrzeugs und/oder die Verteilung der Beladung im Fahrzeug bestimmen. Das tragbare Kommunikationsgerät kann zur Bestimmung der Beladung und/oder der Verteilung der Beladung im Fahrzeug bei einem unbeladenen Fahrzeug gemessene Messwerte für die Beschleunigung berücksichtigen. Solche Messwerte, wie auch gegebenenfalls das Gewicht eines unbeladenen Fahrzeugs, können in dem tragbaren Kommunikationsgerät abgelegt sein, nämlich in einem Speicher. Diese Ausführungsform hat den Vorteil, dass der Fahrer sein Fahrverhalten an die jeweils aktuelle Beladung und/oder Verteilung der Beladung im Fahrzeug anpassen kann. Das tragbare Kommunikationsgerät kann den Fahrer auch darüber informieren, wie die aktuelle Beladung und/oder die aktuelle Verteilung der Beladung im Fahrzeug die Durchführung unterschiedlicher Fahrmanöver beeinflusst. Zum Beispiel kann das tragbare Kommunikationsgerät ein Warnsignal dann ausgeben, wenn die Ladung im Fahrzeug ungünstig verteilt bzw. positioniert ist und das Durchführen eines bestimmten Fahrmanövers eine Gefahr darstellen könnte.

Auf der Basis der Messwerte des Beschleunigungssensors kann das tragbare Kommunikationsgerät einen Konzentrationsgrad des Fahrers bestimmen. Das tragbare Kommunikationsgerät kann den Fahrer dann über den Konzentrationsgrad informieren und/oder es kann den Fahrer dann warnen, wenn sein Konzentrationsgrad einen vorbestimmten Grad unterschreitet bzw. wenn die Aufmerksamkeit des Fahrers nachlässt. Also bestimmt das tragbare Kommunikationsgerät bei dieser Ausführungsform den Grad der Aufmerksamkeit des Fahrers abhängig von der gemessenen Beschleunigung. Dies kann zum Beispiel so aussehen, dass das tragbare Kommunikationsgerät abhängig von den Messwerten des Beschleunigungssensors einen Verlauf einer durch das Fahrzeug zurückgelegten Fahrbahn ermittelt und abhängig von diesem Verlauf den Konzentrationsgrad bestimmt. Gleichfalls kann das tragbare Kommunikationsgerät auf diesem Wege einen Alkoholtest durchführen und den Fahrer dann warnen, wenn auf der Basis der Messwerte des Beschleunigungssensors ein ungewöhnliches Fahrverhalten des Fahrers festgestellt wird. Im Falle, dass die Konzentration des Fahrers nachlässt bzw. ein ungewöhnliches Fahrverhalten des Fahrers festgestellt wird, kann das tragbare Kommunikationsgerät eine Kommunikationsverbindung zwischen zu einer Notrufzentrale herstellen und Daten an die Notrufzentrale übertragen. Dann wird die Notrufzentrale über eine potentielle Gefahr auf der Straße informiert.

Eine auf der Basis der Messwerte des Beschleunigungssensors durch das tragbare Kommunikationsgerät durchführbare Funktion kann eine Geschwindigkeitsmessung sein. Und zwar kann die das tragbare Kommunikationsgerät abhängig von den Messwerten des Beschleunigungssensors eine Geschwindigkeit des tragbaren Kommunikationsgeräts und somit des Fahrzeugs bestimmen. Diese Ausführungsform erweist sich insbesondere bei Durchfahrten durch Tunnels als besonders vorteilhaft. Dann sind nämlich keine Navigationsdaten von einem gegebenenfalls im tragbaren Kommunikationsgerät vorhandenen Navigationssystem vorhanden. Das Navigationssystem des tragbaren Kommunikationsgeräts kann bei dieser Ausführungsform die auf der Basis der Messwerte des Beschleunigungssensors ermittelten Geschwindigkeitswerte verwenden und dem Fahrer ununterbrochen Navigationshinweise bereitstellen.

Eine anhand der Messwerte des Beschleunigungssensors durch das tragbare Kommunikationsgerät durchführbare Funktion kann eine Erkennung eines bevorstehenden Parkvorgangs des Fahrzeugs sein. Dann kann das tragbare Kommunikationsgerät abhängig von den Messwerten des Beschleunigungssensors einen bevorstehenden Parkvorgang des Fahrzeugs erkennen und nach Erkennen eines bevorstehenden Parkvorgangs den Fahrer beim Durchführen des Parkvorgangs unterstützen. Zum Beispiel kann das tragbare Kommunikationsgerät bei dieser Ausführungsform Ultraschalldaten eines Ultraschallsensors und/oder Bilddaten einer Kamera und/oder Radardaten eines Radargeräts unmittelbar empfangen und den Fahrer abhängig von einer Verarbeitung der Ultraschalldaten und/oder der Bilddaten und/oder der Radardaten beim Durchführen des Parkvorgangs unterstützen. Das tragbare Kommunikationsgerät kann abhängig von den Ultraschalldaten und/oder den Bilddaten und/oder den Radardaten eine Parkbahn berechnen, entlang welcher das Fahrzeug in eine Parklücke eingeparkt werden kann. Dann kann das tragbare Kommunikationsgerät Steuerdaten unmittelbar an ein Lenksteuergerät senden und somit die lenkbaren Räder des Fahrzeugs gemäß der berechneten Parkbahn lenken. Ergänzend oder alternativ kann das tragbare Kommunikationsgerät auch Bilder auf einer Anzeigeeinrichtung des tragbaren Kommunikationsgeräts anzeigen, die auf den empfangenen Ultraschalldaten und/oder den Bilddaten und/oder den Radardaten beruhen. Zum Beispiel kann das tragbare Kommunikationsgerät auf der Anzeigeeinrichtung Bilder über die Umgebung des Fahrzeugs anzeigen. Selbiges kann das tragbare Kommunikationsgerät auch auf einer fahrzeuginternen Anzeigeeinrichtung anzeigen, nämlich unter Ausgabe entsprechender Steuerdaten an ein Steuergerät. Das tragbare Kommunikationsgerät kann anhand der Messwerte des Beschleunigungssensors eine Fahrtrichtung des Fahrzeugs erkennen und abhängig von der erkannten Fahrtrichtung eine Fahrbahn extrapolieren, entlang welcher das Fahrzeug mit höchster Wahrscheinlichkeit gefahren wird. Das tragbare Kommunikationsgerät kann auf seiner Anzeigeeinrichtung und/oder auf einer fahrzeuginternen Anzeigeeinrichtung dann die extrapolierte Fahrbahn anzeigen, wie auch Bilder über die Umgebung des Fahrzeugs.

Bevorzugt umfasst das tragbare Kommunikationsgerät ein Navigationssystem, insbesondere mit einem GPS(Global Positioning System)-Empfänger und/oder einem Galileo-Empfänger. Dann kann das tragbare Kommunikationsgerät auch unter Berücksichtigung von Daten des Navigationssystems eine Funktion durchführen, die den Fahrer beim Führen des Fahrzeugs unterstützt. Zum Beispiel kann das tragbare Kommunikationsgerät den Fahrer dann warnen, wenn es abhängig von den Daten des Navigationssystems und/oder den Messwerten des Beschleunigungssensors ein bevorstehendes oder ein bereits erfolgtes Verlassen einer Spur erkennt. Durch die Verwendung von Daten des Navigationssystems zur Fahrerunterstützung wird die Funktionalität des tragbaren Kommunikationsgeräts weiterhin erweitert.

Die Funktionalität des tragbaren Kommunikationsgeräts wird in einer Ausführungsform durch einen Kompass erweitert. Das tragbare Kommunikationsgerät kann nämlich einen Kompass umfassen und auch unter Berücksichtigung von Messwerten des Kompasses eine Funktion durchführen, die den Fahrer beim Führen des Fahrzeugs unterstützt. Anhand von Messwerten eines Kompasses gelingt es nämlich, die Änderung der Fahrtrichtung des Fahrzeugs zu erkennen; es ist auch möglich, einen Verlauf einer durch das Fahrzeug zurückgelegten Fahrbahn zu ermitteln. Anhand der Messwerte des Kompasses kann das tragbare Kommunikationsgerät eine bereits abhängig von den Messwerten des . Beschleunigungssensors ermittelte Größe - zum Beispiel ein Fahrverhalten des Fahrers - plausibilisieren. Zum Beispiel kann das tragbare Kommunikationsgerät überprüfen, ob ein anhand der Messwerte des Beschleunigungssensors ermitteltes Fahrverhalten des Fahrers mit einem anhand der Messwerte des Kompasses ermittelten Fahrverhaltens übereinstimmt.

Eine durch das tragbare Kommunikationsgerät anhand der Messwerte des Beschleunigungssensors durchführbare Funktion kann eine Erkennung eines Zustands einer Straße sein. Und zwar kann das tragbare Kommunikationsgerät abhängig von den Messwerten des Beschleunigungssensors auf einen Zustand einer Straße zurückschließen, auf welcher das Fahrzeug gefahren wird. Insbesondere kann das tragbare Kommunikationsgerät abhängig von Messwerten des Beschleunigungssensors einen Reibungskoeffizienten ermitteln, welcher dann den Zustand der Straße charakterisiert. Das tragbare Kommunikationsgerät kann den Fahrer über den Zustand der Straße informieren. Dies kann zum Beispiel so aussehen, dass eine Vielzahl von vorbestimmten möglichen Zuständen in dem tragbaren Kommunikationsgerät abgelegt sind, nämlich beispielsweise "Eis" und/oder "Schnee" und/oder "Sand" und/oder "Regen" und/oder "guter Straßenzustand". Bei der Ermittlung des Zustands der Straße kann das tragbare Kommunikationsgerät auch weitere fahrzeugspezifische Informationen berücksichtigen, die das tragbare Kommunikationsgerät unmittelbar von Steuergeräten des Fahrzeugs empfangen kann. Und zwar kann das tragbare Kommunikationsgerät eine Information über eine Motordrehzahl von einem Motorsteuergerät und/oder über einen Pedalweg eines Gaspedals von einem Pedalwegsensor empfangen und zur Bestimmung des Zustands der Straße heranziehen. In einer Verwirklichung dieser Ausführungsform kann das tragbare Kommunikationsgerät aus den empfangenen Informationen einen Sollwert der Beschleunigung des Fahrzeugs berechnen und die Messwerte des Beschleunigungssensors mit dem berechneten Sollwert vergleichen. Abhängig von einem Ergebnis des Vergleichs kann das tragbare Kommunikationsgerät dann auf den Zustand der Straße zurückschließen. Bei dieser Ausführungsform kann der Fahrer also über die tatsächlichen Straßenbedingungen informiert werden, und er kann sein Fahrverhalten an die herrschenden Straßenbedingungen anpassen. Es ist auch sinnvoll möglich, dass das tragbare Kommunikationsgerät Daten mit Informationen über den Zustand der Straße über seine Kommunikationsschnittstelle an Geräte anderer Fahrzeuge und/oder an eine externe Datenverarbeitungsvorrichtung - hier vorzugsweise mobilfunkkonform - und/oder an eine Notrufzentrale sendet.

Das tragbare Kommunikationsgerät kann auch dazu ausgelegt sein, von einer Sensoreinrichtung empfangene Daten an eine fahrzeugexterne Datenverarbeitungsvorrichtung zu übertragen. Somit können durch eine in das Fahrzeug eingebaute Sensoreinrichtung erfasste Sensordaten an ein externes Zentrum zwecks einer Diagnose übermittelt werden. Die externe Datenverarbeitungsvorrichtung kann dann anhand der Sensordaten die Funktionsfähigkeit der in das Fahrzeug eingebauten Sensoreinrichtung überprüfen. Die Übertragung der Daten an die externe Datenverarbeitungsvorrichtung kann zum Beispiel mobilfunkkonform erfolgen, das heißt gemäß einem Mobilfunkstandard (zum Beispiel GSM und/oder UMTS).

Zur Erfindung gehört auch ein Fahrzeug mit einem erfindungsgemäßen Fahrerassistenzsystem oder einer bevorzugten Ausgestaltung desselben.

Bei einem erfindungsgemäßen Verfahren wird ein Fahrer beim Führen eines Fahrzeugs mit Hilfe eines Fahrerassistenzsystems unterstützt. Das Fahrerassistenzsystem umfasst zumindest ein in das Fahrzeug eingebautes Steuergerät und/oder zumindest eine in das Fahrzeug eingebaute Sensoreinrichtung. Unter Umgehung eines fahrzeuginternen Datenübertragungssystems werden Daten über eine Kommunikationsschnittstelle des Steuergeräts und/oder der Sensoreinrichtung unmittelbar zwischen dem Steuergerät und/oder der Sensoreinrichtung und einem tragbaren Kommunikationsgerät zumindest in eine Richtung übertragen. Durch die Datenübertragung wirken das tragbare Kommunikationsgerät und das Steuergerät und/oder die Sensoreinrichtung derart zusammen, dass zumindest eine Funktion durchgeführt wird, die den Fahrer beim Führen des Fahrzeugs unterstützt.

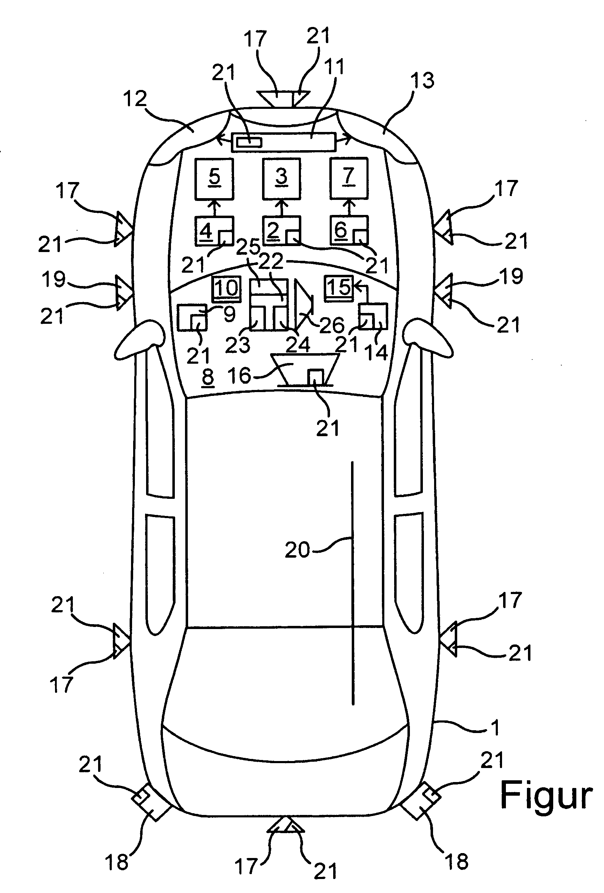

Weitere Merkmale der Erfindung ergeben sich aus den Ansprüchen, der Figur und der Figurenbeschreibung. Alle vorstehend in der Beschreibung genannten Merkmale und Merkmalskombinationen sowie die nachfolgend in der Figurenbeschreibung genannten oder in der Figur alleine gezeigten Merkmale und Merkmalskombinationen sind nicht nur in der jeweils angegebenen Kombination, sondern auch in anderen Kombinationen oder auch in Alleinstellung verwendbar.

Die Erfindung wird nun anhand eines bevorzugten Ausführungsbeispiels, wie auch unter Bezugnahme auf die beigefügte Zeichnung näher erläutert. Die einzige Figur zeigt in schematischer Darstellung ein Fahrzeug mit einem Fahrerassistenzsystem gemäß einer Ausführungsform der Erfindung.

Ein in der Figur in schematischer Darstellung gezeigter Personenkraftwagen 1 umfasst ein in den Personenkraftwagen 1 werkseitig eingebautes Fahrerassistenzsystem zum Unterstützen eines Fahrers beim Führen des Personenkraftwagens 1.

Das Fahrerassistenzsystem umfasst ein Lenksteuergerät 2 zur Ansteuerung einer Lenkvorrichtung 3 des Personenkraftwagens 1. Das Lenksteuergerät 2 kann somit die lenkbaren Räder des Personenkraftwagens 1 lenken, nämlich durch entsprechende Betätigung der Lenkvorrichtung 3.

Das Fahrerassistenzsystem umfasst außerdem ein Bremssteuergerät 4 zur Ansteuerung eines Bremssystems 5 des Personenkraftwagens 1. Unter Ausgabe entsprechender Steuersignale an das Bremssystem 5 kann das Bremssteuergerät 4 den Personenkraftwagen 1 bremsen.

Das Fahrerassistenzsystem umfasst außerdem ein Wisch- und/oder Spül- bzw. Waschanlage-Steuergerät 6, das zur Ansteuerung einer Wisch- und/oder Waschanlage 7 für eine Windschutzscheibe 8 des Personenkraftwagens 1 dient. Unter Ausgabe entsprechender Steuersignale an die Wisch- und/oder Waschanlage 7 kann das Wischanlage- und/oder Waschanlage-Steuergerät 6 einen Waschvorgang der Windschutzscheibe 8 einleiten.

Das Fahrerassistenzsystem umfasst ein Bildprojektor-Steuergerät 9, welches zur Ansteuerung eines Bildprojektors 10 (Head-Up-Display) ausgebildet ist. Mittels des Bildprojektors 10 können Bilder an die Windschutzscheibe 8 projiziert werden. Der Bildprojektor 10 kann zum Beispiel an einer Instrumententafel des Personenkraftwagens 1 angeordnet sein.

Das Fahrerassistenzsystem umfasst ein Scheinwerfer-Steuergerät 11, welches zur Ansteuerung von Scheinwerfern 12, 13 des Personenkraftwagens 1 dient. Unter Ausgabe entsprechender Steuersignale kann das Scheinwerfer-Steuergerät 11 zum Beispiel zwischen einem Abblendlicht und einem Fernlicht umschalten und/oder ein Nebellicht aktivieren bzw. deaktivieren und/oder - wenn die Ausgestaltung der Scheinwerfer 12, 13 es erlaubt - eine Hell- Dunkel-Grenze des Fernlichts und/oder des Abblendlichts beliebig einstellen.

Das Fahrerassistenzsystem kann auch ein Bildschirm-Steuergerät 14 aufweisen, mittels welchem ein in den Personenkraftwagen 1 fest eingebauter Bildschirm 15 angesteuert werden kann.

Das Fahrerassistenzsystem umfasst auch eine Vielzahl von Sensoreinrichtungen zum Erfassen von Daten über eine Fahrzeugumgebung:
Das Fahrerassistenzsystem umfasst eine Frontkamera 16 zum Erfassen von Bilddaten über einen Umgebungsbereich vor dem Personenkraftwagen 1. Die Frontkamera 16 ist hinter der Windschutzscheibe 8 im Innenraum des Personenkraftwagens 1 platziert, nämlich beispielsweise unmittelbar unter dem Fahrzeughimmel. Die Frontkamera 16 erfasst im Ausführungsbeispiel einen Bereich bis zu 10 m vor dem Personenkraftwagen 1. Die Frontkamera 16 kann eine CMOS-Kamera sein.
Das Fahrerassistenzsystem umfasst außerdem eine Vielzahl von an der Karosserie des Personenkraftwagens 1 befestigten Kameras 17, die jeweils zum Erfassen eines Umgebungsbereichs des Personenkraftwagens 1 dienen. Die Kameras 17 weisen dabei jeweils einen relativ breiten Erfassungsbereich mit einem Öffnungswinkel von zum Beispiel 180° auf. Somit kann durch die Kameras 17 eine gesamte Umgebung des Personenkraftwagens 1, nämlich ein 360°-Bild, erfasst werden. Die Anzahl sowie die Anordnung der Kameras 17 sind in der Figur lediglich beispielhaft dargestellt; anstelle von sechs Kameras 17 können auch vier Kameras 17 verwendet werden, die aufgrund ihrer breiten Erfassungsbereiche die gesamte Umgebung des Personenkraftwagens 1 erfassen können. Die Kameras 17 können an der Karosserie des Personenkraftwagens 1 befestigt sein, nämlich zum Beispiel an jeweiligen Stoßfängern des Personenkraftwagens 1. Eine Kamera 17 ist an einer Fahrzeugfront angeordnet, eine Kamera 17 kann an einem linken Rande des vorderen Stoßfängers angeordnet sein, eine Kamera 17 kann an einem rechten Rande des vorderen Stoßfängers angeordnet sein, eine Kamera 17 kann an einem linken Rande eines hinteren Stoßfängers angeordnet sein, eine Kamera 17 kann an einem rechten Rande des hinteren Stoßfängers angeordnet sein und eine Kamera 17 kann am Heck des Personenkraftwagens 1 an dem hinteren Stoßfänger angeordnet sein.
Das Fahrerassistenzsystem umfasst zwei Radargeräte 18, die zum Orten von Objekten in der Umgebung des Personenkraftwagens 1 dienen. Die Radargeräte 18 können zum Beispiel in jeweiligen Eckbereichen des hinteren Stoßfängers des Personenkraftwagens 1 angebracht sein. Die Radargeräte 18 können auch die jeweiligen Totwinkelbereiche des Personenkraftwagens 1 erfassen.
Das Fahrerassistenzsystem umfasst außerdem zwei Ultraschallsensoren 19, die jeweils an einer Seitenflanke des Personenkraftwagens 1 angebracht sind, nämlich beispielsweise im Bereich des jeweiligen Außenspiegels oder in jeweiligen Randbereichen des vorderen Stoßfängers. Die Ultraschallsensoren 19 erfassten jeweils einen seitlichen Umgebungsbereich des Personenkraftwagens 1.

Die Steuergeräte des Fahrerassistenzsystems - nämlich das Lenk-Steuergerät 2, das Brems-Steuergerät 4, das Wisch- und/oder Waschanlage-Steuergerät 6, das Bildprojektor-Steuergerät 9, das Scheinwerfer-Steuergerät 11 und das Bildschirm-Steuergerät 14 -, wie auch die Sensoreinrichtungen des Fahrerassistenzsystems - nämlich die Frontkamera 16, die Kameras 17, die Radargeräte 18 und die Ultraschallsensoren 19 - sind im Personenkraftwagen 1 werkseitig vorhanden. Dies bedeutet, dass der Personenkraftwagen 1 mit einem solchen Fahrerassistenzsystem ausgeliefert wurde; die Steuergeräte 2, 4, 6, 9, 11, 14, wie auch die Sensoreinrichtungen 16, 17, 18, 19 sind somit fest in den Personenkraftwagen 1 eingebaut. Sie sind funktionsfähig und können alleine oder unter Zusammenwirken mit jeweils anderen Komponenten des Fahrerassistenzsystems Funktionen bereitstellen, die den Fahrer beim Führen des Personenkraftwagens 1 unterstützen. Zum Beispiel können die Steuergeräte 2, 4, 6, 9, 11, 14, wie auch die Sensoreinrichtungen 16, 17, 18, 19 an zumindest einen Kommunikationsbus 20 des Personenkraftwagens 1 angeschlossen sein und über den Kommunikationsbus 20 - welches ein fahrzeuginternes Datenübertragungssystem ist - miteinander kommunizieren. Durch diese Kommunikation werden durch das Fahrerassistenzsystem Funktionen bereitgestellt, welche den Fahrer beim Führen des Personenkraftwagens 1 unterstützen. Diese Funktionen können zum Beispiel folgende Funktionen sein:
- das Bildschirm-Steuergerät 14 kann Bilder auf dem Bildschirm 15 anzeigen, die auf am Kommunikationsbus 20 abgegriffenen Bilddaten der Kameras 17 und/oder der Frontkamera 16 beruhen;
- die Frontkamera 16 oder ein mit dieser gekoppeltes Steuergerät kann die aufgenommenen Bilddaten verarbeiten und zum Beispiel Hindernisse und/oder Fahrbahnmarkierungen und/oder Verkehrszeichen erkennen;
- die Radargeräte 18 können in der Umgebung des Personenkraftwagens 1 befindliche Objekte orten;
- die Ultraschallsensoren 19 oder ein damit verbundenes Steuergerät können Parklücken erkennen und den Fahrer beim Durchführen von Parkvorgängen unterstützen.

All diese Funktionen des Fahrerassistenzsystems stellen nur Beispiele dar und sollen nicht abschließend verstanden werden. Es soll lediglich betont werden, dass das Fahrerassistenzsystem, wie es in den Personenkraftwagen 1 eingebaut ist, voll funktionsfähig ist, auch ohne ein - nachfolgend beschriebenes - tragbares Kommunikationsgerät.

Die Steuergeräte 2, 4, 6, 9, 11, 14 können in einem Ausführungsbeispiel ein gemeinsames Steuergerät bilden bzw. in ein gemeinsames Gehäuse integriert sein. Dann kann es ausreichend sein, für das gemeinsame Steuergerät lediglich eine Kommunikationsschnittstelle 21 vorzusehen.

Die Steuergeräte 2, 4, 6, 9, 11, 14, wie auch die Sensoreinrichtungen 16, 17, 18, 19 verfügen alle jeweils über eine Kommunikationsschnittstelle 21, die zur drahtlosen Datenkommunikation mit einem tragbaren Kommunikationsgerät 22 dient. Die Steuergeräte 2, 4, 6, 9, 11, 14, wie auch die Sensoreinrichtungen 16, 17, 18, 19 können über die jeweiligen Kommunikationsschnittstellen 21 Daten an das tragbare Kommunikationsgerät 22 senden und Daten vom tragbaren Kommunikationsgerät 22 empfangen. Die Kommunikationsschnittstellen sind zum Senden und zum Empfangen von Daten gemäß einem Kommunikationsstandard der IEEE-802.11-Familie und /oder einem Kommunikationsstandard der IEEE-802.15-Familie ausgebildet. Mit den jeweiligen Kommunikationsschnittstellen 21 können die Steuergeräte 2, 4, 6, 9, 11, 14, wie auch die Sensoreinrichtungen 16, 17, 18, 19 bereits werkseitig ausgestattet werden oder nachträglich aufgerüstet werden.

Das tragbare Kommunikationsgerät 22 ist im Ausführungsbeispiel ein Mobiltelefon. Das tragbare Kommunikationsgerät 22 kann auch ein Teil des Fahrerassistenzsystems sein, er kann aber auch ein persönliches Mobiltelefon des Fahrers sein. Das tragbare Kommunikationsgerät umfasst eine Kommunikationsschnittstelle 23, die zur Kommunikation mit den Kommunikationsschnittstellen 21 ausgebildet ist, nämlich gemäß einem Kommunikationsstandard der oben genannten Familien. Das tragbare Kommunikationsgerät 22 umfasst eine Recheneinrichtung 24 zum Verarbeiten von Daten, wie auch ein Display 25.

Das tragbare Kommunikationsgerät 22 kann an der Windschutzscheibe 8 des Personenkraftwagens 1 mittels einer Halterung 26 gehalten werden.

Eine solche Ausstattung der Steuergeräte 2, 4, 6, 9, 11, 14, wie auch der Sensoreinrichtungen 16, 17, 18, 19 mit den jeweiligen Kommunikationsschnittstellen 21 ermöglicht, dass das tragbare Kommunikationsgerät 22 mit selbigen Steuergeräten 2, 4, 6, 9, 11, 14 und Sensoreinrichtungen 16, 17, 18, 19 kommunizieren kann. Und zwar kann der Fahrer auf dem tragbaren Kommunikationsgerät 22 ein Computerprogramm installieren und ausführen, wodurch zu den bereits beim Fahrerassistent vorhandenen Funktionen zusätzliche Funktionen bereitgestellt werden können, die den Fahrer beim Führen des Personenkraftwagens 1 unterstützen.

Die Frontkamera 16 überträgt Bilddaten an das tragbare Kommunikationsgerät 22. Die Recheneinrichtung 24 kann abhängig von den Bilddaten der Frontkamera 16 folgende Zusatzfunktionen zur Unterstützung des Fahrers bereitstellen. Die Recheneinrichtung 24 kann auf dem Display 25 des tragbaren Kommunikationsgeräts 22 direkt Bilder anzeigen, die auf den gewonnenen Bilddaten der Frontkamera 16 beruhen. Die Recheneinrichtung 24 kann auch über die Kommunikationsschnittstelle 23 Steuerdaten an das Bildschirm-Steuergerät 14 übertragen, so dass Bilder auf dem Bildschirm 15 angezeigt werden können, die auf den Bilddaten der Frontkamera 16 beruhen. Die Recheneinrichtung 24 kann die Bilddaten der Frontkamera 16 auch einer Mustererkennung unterziehen, um ein Verkehrszeichen zu erkennen. Nach Erkennen eines Verkehrszeichens kann die Recheneinrichtung 24 ein das erkannte Verkehrszeichen wiedergebendes Bild auf dem Display 25 und/oder auf dem Bildschirm 15 anzeigen und/oder ein das erkannte Verkehrszeichen charakterisierendes akustisches Signal ausgeben. Abhängig von den Bilddaten der Frontkamera 16 kann die Recheneinrichtung 24 Fahrbahnmarkierungen erkennen. Die Recheneinrichtung 24 kann dann ein bevorstehendes oder ein bereits erfolgtes Überfahren einer erkannten Fahrbahnmarkierung durch den Personenkraftwagen 1 feststellen und nach Feststellen eines bevorstehenden oder erfolgten Überfahrens der Fahrbahnmarkierung ein akustisches Signal ausgeben und/oder Steuerdaten an das Brems-Steuergerät 4 übermitteln, so dass der Personenkraftwagen 1 mit einer Verzögerung keiner als 0,3 G verzögert wird. Dann wird der Fahrer durch das Abbremsen des Personenkraftwagens 1 vor dem möglichen Überfahren der Fahrbahnmarkierung gewarnt. Zur Feststellung eines bevorstehenden oder erfolgten Überfahrens einer erkannten Fahrbahnmarkierung kann die Recheneinrichtung 24 auch Navigationsdaten eines Navigationssystems des tragbaren Kommunikationsgeräts 22 und/oder Messwerte eines in das tragbare Kommunikationsgerät 22 integrierten Beschleunigungssensors berücksichtigen.

Die Recheneinrichtung 24 kann abhängig von den Bilddaten der Frontkamera 16 einen Nebel erkennen und/oder einen Helligkeitsgrad der Umgebung des Personenkraftwagens 1 ermitteln und/oder Scheinwerfer eines Gegenverkehrs und/oder Rückleuchten vorausfahrender Fahrzeuge erkennen. Abhängig davon kann die Recheneinrichtung 24 Steuerdaten an das Scheinwerfer-Steuergerät 11 übertragen, um die Scheinwerfer 12, 13 anzusteuern. Es ist auch sinnvoll möglich, abhängig von Messwerten eines Beschleunigungssensors des tragbaren Kommunikationsgeräts 22 und insbesondere abhängig von einer daraus ermittelten Querbeschleunigung des Personenkraftwagens 1 die Scheinwerfer 12, 13 anzusteuern. Somit kann bei einer Kurvenfahrt die Leuchtrichtung in Kurvenrichtung verändert werden, so dass die Fahrsicherheit bei einer Kurvenfahrt durch ein verbessertes Sichtfeld erhöht werden kann.

Die Recheneinrichtung 24 kann auch die durch die äußeren Kameras 17 erfassten Bilddaten verarbeiten. Zum Beispiel kann die Recheneinrichtung 24 auf dem Display 25 des tragbaren Kommunikationsgeräts 22 und/oder auf dem Bildschirm 15 direkt Bilder anzeigen, die auf den Bilddaten der Kameras 17 beruhen. Die Recheneinrichtung 24 kann auch durch Verarbeitung der Bilddaten der Kameras 17 solche Bilddaten berechnen, die eine Darstellung einer Draufsicht auf den Personenkraftwagen 1 und einen Umgebungsbereich desselben beinhalten. Dann kann auf dem Display 25 und/oder dem Bildschirm 15 der Personenkraftwagen 1 aus einer Vogelperspektive angezeigt werden.

Die Recheneinrichtung 24 kann auch die von zumindest zwei Sensoreinrichtungen 16, 17, 18, 19, zum Beispiel durch zumindest zwei Kameras 17, empfangenen Daten miteinander kombinieren. Somit wird eine Sensorfusion bzw. Sensorvereinigung erreicht, die Recheneinrichtung 24 kann abhängig von der Kombination der Daten eine gemeinsame Sensorfunktiön durchführen, die den Fahrer beim Führen des Fahrzeugs unterstützt. Dies kann zum Beispiel so aussehen, dass die Recheneinrichtung 24 Radardaten eines der Radargeräte 18 mit den Ultraschalldaten und/oder mit den Kameradaten miteinander kombiniert und abhängig von dieser Kombination eine gemeinsame Funktion durchführt. Beispielsweise kann die Recheneinrichtung abhängig von der Kombination der jeweiligen Daten Hindernisse in der Umgebung des Personenkraftwagens 1 erkennen und dies dem Fahrer mitteilen.

Die Recheneinrichtung 25 kann auch Steuerdaten an das Bildprojektor-Steuergerät 9 übertragen, um den Bildprojektor 10 anzusteuern. Zum Beispiel können an das Bildprojektor-Steuergerät 9 Navigationshinweise übertragen werden, die dann auf die Windschutzscheibe 8 projiziert werden können.

Die Recheneinrichtung 25 empfängt auch Ultraschalldaten der Ultraschallsensoren 19. Anhand der Ultraschalldaten kann die Recheneinrichtung 24 zum Beispiel Parklücken erkennen, in welche der Personenkraftwagen 1 eingeparkt werden kann. Abhängig von erkannten Parklücken kann die Recheneinrichtung 24 eine Parkbahn berechnen, entlang welcher der Personenkraftwagen 1 in eine erkannte Parklücke eingeparkt werden kann. Die Recheneinrichtung 24 kann auch Steuerdaten an das Lenksteuergerät 2 übertragen und somit die lenkbaren Räder des Personenkraftwagens 1 lenken. Auf diesem Wege wird dem Fahrer ein semi-autonomes Parkhilfesystem bereitgestellt, mit welchem der Personenkraftwagen 1 in eine Parklücke eingeparkt werden kann, ohne dass der Fahrer Lenkaktionen ausführen muss. Und zwar muss der Fahrer lediglich Gas geben und bremsen, das Lenken der lenkbaren Räder übernimmt die Recheneinrichtung 28, nämlich mittels des Lenksteuergeräts 2. Alternativ kann die Recheneinrichtung 20 - anstatt die Steuerdaten an das Lenksteuergerät 2 zu übertragen - Steuerdaten an das Bildprojektor-Steuergerät 9 und/oder das Bildschirm-Steuergerät 14 übertragen und hierdurch den Fahrer darüber informieren, welche Lenkaktionen er auszuführen hat. Dann kann der Fahrer selbst mittels des Lenkrads die lenkbaren Räder des Personenkraftwagens 1 lenken und den Personenkraftwagen 1 in die Parklücke einparken. Der Bildprojektor 10 und/oder der Bildschirm 15 kann hier Lenkhinweise projizieren bzw. anzeigen.

Abhängig von einem erkannten Nebel und/oder abhängig von einer erkannten Verschmutzung der Windschutzscheibe 8 kann die Recheneinrichtung 24 auch Steuerdaten an das Wisch- und/oder Waschanlage-Steuergerät 6 übertragen und hierdurch die Wisch- und/oder Waschanlage 7 aktivieren.

Die Recheneinrichtung 24 empfängt auch Radardaten von den Radargeräten 18. Und zwar kann die Recheneinrichtung 24 abhängig von den Radardaten Objekte in den jeweiligen Erfassungsbereichen der Radargeräte 18 orten. Die Recheneinrichtung 24 kann hier zum Beispiel eine Geschwindigkeit und/oder eine Beschleunigung und/oder eine Bewegungsrichtung eines erkannten Objektes relativ zum Personenkraftwagen 1 bestimmen und den Fahrer entsprechend informieren. Zum Beispiel kann die Recheneinrichtung 24 Bilder auf dem Display 25 und/oder dem Bildschirm 15 anzeigen und/oder mittels des Bildprojektors 10 auf die Windschutzscheibe 8 projizieren und somit den Fahrer über erkannte Objekte in den Erfassungsbereichen der Radargeräte 18 informieren. Ergänzend oder alternativ kann die Recheneinrichtung 24 akustische Signale ausgeben, mit denen der Fahrer über die erkannten Objekte informiert wird. Dies ist dann besonders vorteilhaft, wenn die Radargeräte 18 auch die Totwinkelbereiche erfassen und in den Totwinkelbereichen befindliche Objekte detektieren können.

Die Erfindung ist nicht auf die in der Zeichnung dargestellten Ausführungsbeispiele beschränkt. Alle vorstehend im allgemeinen Teil der Beschreibung beschriebenen und in der Zeichnung dargestellten Merkmale und Merkmalskombinationen sind miteinander kombinierbar, so dass diesbezüglich auch derart gebildete Ausführungsformen als offenbart anzusehen sind. Insbesondere können anhand der im allgemeinen Teil der Beschreibung genannten Merkmale und Merkmalskombinationen neue Ausführungsbeispiele generiert werden, nämlich auch solche, die nicht explizit in der Zeichnung dargestellt sind. Merkmale und Merkmalskombinationen der mit der Figurenbeschreibung offenbarten Ausführungsbeispiele können mit Merkmalen und Merkmalskombinationen, die im allgemeinen Teil der Beschreibung offenbart sind, zu neuen Ausführungsbeispielen kombiniert werden.

## Patentansprüche

1. Fahrerassistenzsystem für ein Fahrzeug (1), wobei das Fahrerassistenzsystem zumindest eine in das Fahrzeug (1) eingebaute Sensoreinrichtung (16, 17, 18, 19) aufweist,
**dadurch gekennzeichnet, dass**
die zumindest eine Sensoreinrichtung (16, 17, 18, 19) eine Kommunikationsschnittstelle (21) aufweist, über welche unter Umgehung eines fahrzeuginternen Datenübertragungssystems (20) Daten unmittelbar zwischen der Sensoreinrichtung (16, 17, 18, 19) und einem tragbaren Kommunikationsgerät (22) zumindest in eine Richtung übertragbar sind, wobei durch die Datenübertragung das tragbare Kommunikationsgerät (22) und die Sensoreinrichtung (16, 17, 18, 19) derart zusammenwirken, dass zumindest eine Funktion durchführbar ist, die einen Fahrer beim Führen des Fahrzeugs (1) unterstützt.

2. Fahrerassistenzsystem nach Anspruch 1,
**dadurch gekennzeichnet, dass**
es das fahrzeuginterne Datenübertragungssystem (20) umfasst und die zumindest eine Sensoreinrichtung (16, 17, 18, 19) an das Datenübertragungssystem (20) angeschlossen ist, wobei durch die zumindest eine Sensoreinrichtung (16, 17, 18, 19) aufgrund einer Datenübertragung über das fahrzeuginterne Datenübertragungssystem (20) eine Funktion zur Fahrerunterstützung bereitstellbar ist, so dass die durch das Zusammenwirken des tragbaren Kommunikationsgeräts (22) mit der Sensoreinrichtung (16, 17, 18, 19) durchführbare Funktion eine zusätzliche Funktion ist.

3. Fahrerassistenzsystem nach Anspruch 1 oder 2,
**dadurch gekennzeichnet, dass**
über die Kommunikationsschnittstelle (21) Daten unmittelbar zwischen der Sensoreinrichtung (16, 17, 18, 19) und einem als Mobiltelefon oder als tragbarer Personalcomputer ausgebildeten tragbaren Kommunikationsgerät (22) übertragbar sind.

4. Fahrerassistenzsystem nach einem der vorhergehenden Ansprüche,
**dadurch gekennzeichnet, dass**
die Kommunikationsschnittstelle (21) zur drahtlosen Datenübertragung ausgebildet ist.

5. Fahrerassistenzsystem nach einem der vorhergehenden Ansprüche,
**dadurch gekennzeichnet, dass**
die Kommunikationsschnittstelle (21) dazu ausgebildet ist, die Daten gemäß einem Standard der IEEE-802.11-Familie und/oder einem Standard der IEEE-802.15-Familie zu senden und/oder zu empfangen.

6. Fahrerassistenzsystem nach einem der vorhergehenden Ansprüche,
**dadurch gekennzeichnet, dass**
eine in das Fahrzeug (1) eingebaute Sensoreinrichtung (16, 17, 18, 19) eine Frontkamera (16) ist, die in einem Innenraum des Fahrzeugs (1) hinter einer Windschutzscheibe (8) platziert ist und zum Erfassen von Bilddaten über einen Umgebungsbereich vor dem Fahrzeug (1) und zum Übertragen der Bilddaten an das tragbare Kommunikationsgerät (22) ausgebildet ist.

7. Fahrerassistenzsystem nach einem der vorhergehenden Ansprüche,
**dadurch gekennzeichnet, dass**
eine in das Fahrzeug (1) eingebaute Sensoreinrichtung (16, 17, 18, 19) ein Radargerät (18) ist, welches zum Erfassen von Radardaten über einen Umgebungsbereich des Fahrzeugs (1) und zum Übertragen der Radardaten an das tragbare Kommunikationsgerät (22) ausgebildet ist.

8. Fahrerassistenzsystem nach einem der vorhergehenden Ansprüche,
**dadurch gekennzeichnet, dass**
eine in das Fahrzeug (1) eingebaute Sensoreinrichtung (16, 17, 18, 19) ein Ultraschallsensor (19) ist, welcher zum Erfassen von Ultraschalldaten über einen Umgebungsbereich des Fahrzeugs (1) und zum Übertragen der Ultraschalldaten an das tragbare Kommunikationsgerät (22) ausgebildet ist.

9. Fahrerassistenzsystem nach einem der vorhergehenden Ansprüche,
**dadurch gekennzeichnet, dass**
eine in das Fahrzeug (1) eingebaute Sensoreinrichtung (16, 17, 18, 19) zumindest eine an einer äußeren Oberfläche des Fahrzeugs (1) angeordnete Kamera (17), insbesondere eine Vielzahl von Kameras (17), umfasst, welche zum Erfassen von Bilddaten über einen Umgebungsbereich des Fahrzeugs (1) und zum Übertragen der Bilddaten an das tragbare Kommunikationsgerät (22) ausgebildet ist/sind.

10. Fahrerassistenzsystem nach einem der vorhergehenden Ansprüche,
**dadurch gekennzeichnet, dass**
ein in das Fahrzeug (1) eingebautes Steuergerät (2, 4, 6, 9, 11, 14) ein Bremssteuergerät (4) ist, das dazu ausgelegt ist, über seine Kommunikationsschnittstelle (21) Steuerdaten unmittelbar von dem tragbaren Kommunikationsgerät (22) zu empfangen und abhängig von den Steuerdaten ein Bremssystem (5) des Fahrzeugs (1) anzusteuern.

11. Fahrerassistenzsystem nach einem der vorhergehenden Ansprüche,
**dadurch gekennzeichnet, dass**
ein in das Fahrzeug (1) eingebautes Steuergerät (2, 4, 6, 9, 11, 14) ein Scheinwerfer-Steuergerät (11) ist, das dazu ausgelegt ist, über seine Kommunikationsschnittstelle (21) Steuerdaten unmittelbar von dem tragbaren Kommunikationsgerät (22) zu empfangen und abhängig von den Steuerdaten einen Scheinwerfer (12, 13) des Fahrzeugs (1) anzusteuern.

12. Fahrerassistenzsystem nach einem der vorhergehenden Ansprüche,
**dadurch gekennzeichnet, dass**
ein in das Fahrzeug (1) eingebautes Steuergerät (2, 4, 6, 9, 11, 14) ein Lenksteuergerät (2) ist, das dazu ausgelegt ist, über seine Kommunikationsschnittstelle (21) Steuerdaten unmittelbar von dem tragbaren Kommunikationsgerät (22) zu empfangen und abhängig von den Steuerdaten eine Lenkvorrichtung (3) des Fahrzeugs (1) anzusteuern.

13. Fahrerassistenzsystem nach einem der vorhergehenden Ansprüche,
**dadurch gekennzeichnet, dass**
ein in das Fahrzeug (1) eingebautes Steuergerät (2, 4, 6, 9, 11, 14) ein Bildschirm-Steuergerät (14) ist, das dazu ausgelegt ist, über seine Kommunikationsschnittstelle (21) Bilddaten unmittelbar von dem tragbaren Kommunikationsgerät (22) zu empfangen und Bilder auf einem Bildschirm (15) des Fahrerassistenzsystems anzuzeigen, die auf den empfangenen Bilddaten beruhen.

14. Fahrerassistenzsystem nach einem der vorhergehenden Ansprüche,
**dadurch gekennzeichnet, dass**
es das tragbare Kommunikationsgerät (22) umfasst.

15. Fahrerassistenzsystem nach Anspruch 14,
**dadurch gekennzeichnet, dass**
das tragbare Kommunikationsgerät (22) dazu ausgelegt ist, Bilddaten über einen Umgebungsbereich vor dem Fahrzeug (1) unmittelbar von einer Frontkamera (16) zu empfangen, sie zu verarbeiten und abhängig von einem Ergebnis der Verarbeitung eine Funktion durchzuführen, die den Fahrer beim Führen des Fahrzeugs (1) unterstützt.

16. Fahrerassistenzsystem nach Anspruch 15,
**dadurch gekennzeichnet, dass**
das tragbare Kommunikationsgerät (22) eine Anzeigeeinrichtung (25) aufweist und dazu ausgelegt ist, Bilder an der Anzeigeeinrichtung (25) anzuzeigen, die auf den empfangenen Bilddaten beruhen.

17. Fahrerassistenzsystem nach Anspruch 15 oder 16,
**dadurch gekennzeichnet, dass**
das tragbare Kommunikationsgerät (22) dazu ausgelegt ist, zum Erkennen eines Verkehrzeichens die Bilddaten einer Mustererkennung zu unterziehen.

18. Fahrerassistenzsystem nach einem der Ansprüche 15 bis 17,
**dadurch gekennzeichnet, dass**
das tragbare Kommunikationsgerät (22) dazu ausgelegt ist, abhängig von den Bilddaten der Frontkamera (16) Fahrbahnmarkierungen zu erkennen, ein bevorstehendes oder ein bereits erfolgtes Überfahren einer erkannten Fahrbahnmarkierung durch das Fahrzeug (1) festzustellen und nach Feststellen eines bevorstehenden oder bereits erfolgten Überfahrens der erkannten Fahrbahnmarkierung ein Warnsignal auszugeben, welches den Fahrer vor dem bevorstehenden oder erfolgten Überfahren der Fahrbahnmarkierung warnt.

19. Fahrerassistenzsystem nach einem der Ansprüche 15 bis 18,
**dadurch gekennzeichnet, dass**
das tragbare Kommunikationsgerät (22) dazu ausgelegt ist, abhängig von den Bilddaten ein Hindernis, insbesondere einen Fußgänger, zu erkennen und nach Erkennen eines Hindernisses ein Signal auszugeben, welches den Fahrer über das erkannte Hindernis informiert.

20. Fahrerassistenzsystem nach einem der Ansprüche 15 bis 19,
**dadurch gekennzeichnet, dass**.
das tragbare Kommunikationsgerät (22) dazu ausgelegt ist, abhängig von einem Ergebnis der Verarbeitung der Bilddaten der Frontkamera (16) Steuerdaten an ein Scheinwerfer-Steuergerät (11) zur Ansteuerung eines Scheinwerfers (12, 13) des Fahrzeugs (1) zu senden.

21. Fahrerassistenzsystem nach einem der Ansprüche 14 bis 20,
**dadurch gekennzeichnet, dass**
das tragbare Kommunikationsgerät (22) dazu ausgelegt ist, Bilddaten unmittelbar von einer Vielzahl von an einer äußeren Oberfläche des Fahrzeugs (1) angeordneten Kameras (17) zu empfangen, die Bilddaten aller Kameras (17) zu verarbeiten und abhängig von einem Ergebnis der Verarbeitung eine Funktion durchzuführen, die den Fahrer beim Führen des Fahrzeugs (1) unterstützt

22. Fahrerassistenzsystem nach Anspruch 21,
**dadurch gekennzeichnet, dass**
das tragbare Kommunikationsgerät (22) eine Anzeigeeinrichtung (25) aufweist und dazu ausgelegt ist, Bilder an der Anzeigeeinrichtung (25) anzuzeigen, die auf den empfangenen Bilddaten der Kameras (17) beruhen.

23. Fahrerassistenzsystem nach Anspruch 21 oder 22,
**dadurch gekennzeichnet, dass**
das tragbare Kommunikationsgerät (22) einen Beschleunigungssensor und/oder ein Navigationssystem aufweist und dazu ausgelegt ist, abhängig von Messwerten des Beschleunigungssensors und/oder von Daten des Navigationssystems einen Bereich eines durch die Kameras (17) erfassbaren Gesamtumgebungsbereichs auszuwählen und an seiner Anzeigeeinrichtung (25) Bilder über den ausgewählten Bereich anzuzeigen.

24. Fahrerassistenzsystem nach einem der Ansprüche 21 bis 23,
**dadurch gekennzeichnet, dass**
das tragbare Kommunikationsgerät (22) dazu ausgelegt ist, durch die Verarbeitung der Bilddaten der Kameras (17) solche Bilddaten zu berechnen, die eine Darstellung einer Draufsicht auf zumindest einen Bereich eines durch die Kameras (17) erfassbaren Gesamturngebungstsereichs beinhalten.

25. Fahrerassistenzsystem nach einem der Ansprüche 14 bis 24,
**dadurch gekennzeichnet, dass**
das tragbare Kommunikationsgerät (22) dazu ausgelegt ist, Radardaten über einen Umgebungsbereich des Fahrzeugs (1) unmittelbar von einem Radargerät (18) zu empfangen, sie zu verarbeiten und abhängig von einem Ergebnis der Verarbeitung eine Funktion durchzuführen, die den Fahrer beim Führen des Fahrzeugs (1) unterstützt.

26. Fahrerassistenzsystem nach einem der Ansprüche 14 bis 25,
**dadurch gekennzeichnet, dass**
das tragbare Kommunikationsgerät (22) dazu ausgelegt ist, Ultraschalldaten über einen Umgebungsbereich des Fahrzeugs (1) unmittelbar von einem Ultraschallsensor (19) zu empfangen, sie zu verarbeiten und abhängig von einem Ergebnis der Verarbeitung eine Funktion durchzuführen, die den Fahrer beim Führen des Fahrzeugs (1) unterstützt.

27. Fahrerassistenzsystem nach einem der Ansprüche 14 bis 26,
**dadurch gekennzeichnet, dass**
das tragbare Kommunikationsgerät (22) einen Beschleunigungssensor und/oder ein Navigationssystem und/oder einen Kompass aufweist und dazu ausgelegt ist, abhängig von Messwerten des Beschleunigungssensors und/oder von Daten des Navigationssystems und/oder von Messwerten des Kompasses eine Funktion durchzuführen, die den Fahrer beim Führen des Fahrzeugs (1) unterstützt.

28. Fahrerassistenzsystem nach einem der Ansprüche 14 bis 27,
**dadurch gekennzeichnet, dass**
das tragbare Kommunikationsgerät (22) dazu ausgelegt ist, von einer Sensoreinrichtung (16, 17, 18, 19) empfangene Daten an eine fahrzeugexterne Datenverarbeitungsvorrichtung zu übertragen.

29. Fahrzeug (1) mit einem Fahrerassistenzsystem nach einem der vorhergehenden Ansprüche.

30. Verfahren zum Unterstützen eines Fahrers beim Führen eines Fahrzeugs (1) mithilfe eines Fahrerassistenzsystems, welches zumindest eine in das Fahrzeug (1) eingebaute Sensoreinrichtung (16, 17, 18, 19) aufweist,
**dadurch gekennzeichnet, dass**
unter Umgehung eines fahrzeuginternen Datenübertragungssystems (20) über eine Kommunikationsschnittstelle (21) der Sensoreinrichtung (16, 17, 18, 19) Daten unmittelbar zwischen der Sensoreinrichtung (16, 17, 18, 19) und einem tragbaren Kommunikationsgerät (22) zumindest in eine Richtung übertragen werden und durch die Datenübertragung das tragbare Kommunikationsgerät (22) und die Sensoreinrichtung (16, 17, 18, 19) derart zusammenwirken, dass zumindest eine Funktion durchgeführt wird, die den Fahrer beim Führen des Fahrzeugs (1) unterstützt.

## Claims

1. Driver assistance system for a vehicle (1), wherein the driver assistance system has at least one sensor device (16, 17, 18, 19) installed in the vehicle (1),
**characterized in that**
the at least one sensor device (16, 17, 18, 19) has a communication interface (21) which can be used to transmit data directly between the sensor device (16, 17, 18, 19) and a portable communication appliance (22) at least in one direction by bypassing a data transmission system (20) inside the vehicle, wherein the data transmission causes the portable communication appliance (22) and the sensor device (16, 17, 18, 19) to interact such that at least one function can be performed which assists a driver in driving the vehicle (1).

2. Driver assistance system according to Claim 1,
**characterized in that**
it comprises the data transmission system (20) inside the vehicle, and the at least one sensor device (16, 17, 18, 19) is connected to the data transmission system (20), wherein the at least one sensor device (16, 17, 18, 19) can provide a function for driver assistance on the basis of a data transmission via the data transmission system (20) inside the vehicle, as a result of which the function which can be performed by virtue of the interaction of the portable communication appliance (22) and the sensor device (16, 17, 18, 19) is an additional function.

3. Driver assistance system according to Claim 1 or 2,
**characterized in that**
the communication interface (21) can be used to transmit data directly between the sensor device (16, 17, 18, 19) and a portable communication appliance (22) which is in the form of a mobile telephone or in the form of a portable personal computer.

4. Driver assistance system according to one of the preceding claims,
**characterized in that**
the communication interface (21) is designed for wireless data transmission.

5. Driver assistance system according to one of the preceding claims,
**characterized in that**
the communication interface (21) is designed to send and/or receive the data on the basis of a standard from the IEEE-802.11 family and/or a standard from the IEEE-802.15 family.

6. Driver assistance system according to one of the preceding claims,
**characterized in that**
a sensor device (16, 17, 18, 19) installed in the vehicle (1) is a front camera (16) which is positioned in an interior of the vehicle (1) behind a windscreen (8) and is designed for capturing image data pertaining to a surrounding area in front of the vehicle (1) and for transmitting the image data to the portable communication appliance (22).

7. Driver assistance system according to one of the preceding claims,
**characterized in that**
a sensor device (16, 17, 18, 19) installed in the vehicle (1) is a radar appliance (18) which is designed for capturing radar data pertaining to a surrounding area of the vehicle (1) and for transmitting the radar data to the portable communication appliance (22).

8. Driver assistance system according to one of the preceding claims,
**characterized in that**
a sensor device (16, 17, 18, 19) installed in the vehicle (1) is an ultrasonic sensor (19) which is designed for capturing ultrasonic data pertaining to a surrounding area of the vehicle (1) and for transmitting the ultrasonic data to the portable communication appliance (22).

9. Driver assistance system according to one of the preceding claims,
**characterized in that**
a sensor device (16, 17, 18, 19) installed in the vehicle (1) comprises at least one camera (17), particularly a multiplicity of cameras (17), which is/are arranged on an exterior surface of the vehicle (1) and which is/are designed for capturing image data pertaining to a surrounding area of the vehicle (1) and for transmitting the image data to the portable communication appliance (22).

10. Driver assistance system according to one of the preceding claims,
**characterized in that**
a controller (2, 4, 6, 9, 11, 14) installed in the vehicle (1) is a braking controller (4) which is designed to use its communication interface (21) to receive control data directly from the portable communication appliance (22) and to take the control data as a basis for actuating a braking system (5) in the vehicle (1).

11. Driver assistance system according to one of the preceding claims,
**characterized in that**
a controller (2, 4, 6, 9, 11, 14) installed in the vehicle (1) is a headlamp controller (11) which is designed to use its communication interface (21) to receive control data directly from the portable communication appliance (22) and to take the control data as a basis for actuating a headlamp (12, 13) on the vehicle (1).

12. Driver assistance system according to one of the preceding claims,
**characterized in that**
a controller (2, 4, 6, 9, 11, 14) installed in the vehicle (1) is a steering controller (2) which is designed to use its communication interface (21) to receive control data directly from the portable communication appliance (22) and to take the control data as a basis for actuating a steering apparatus (3) in the vehicle (1).

13. Driver assistance system according to one of the preceding claims,
**characterized in that**
a controller (2, 4, 6, 9, 11, 14) installed in the vehicle (1) is a screen controller (14) which is designed to use its communication interface (21) to receive image data directly from the portable communication appliance (22) and to display images based on the received image data on a screen (15) of the driver assistance system.

14. Driver assistance system according to one of the preceding claims,
**characterized in that**
it comprises the portable communication appliance (22).

15. Driver assistance system according to Claim 14,
**characterized in that**
the portable communication appliance (22) is designed to receive image data pertaining to a surrounding area in front of the vehicle (1) directly from a front camera (16), to process said data and to take a result of the processing as a basis for performing a function which assists the driver in driving the vehicle (1).

16. Driver assistance system according to Claim 15,
**characterized in that**
the portable communication appliance (22) has a display device (25) and is designed to display images based on the received image data on the display device (25).

17. Driver assistance system according to Claim 15 or 16,
**characterized in that**
the portable communication appliance (22) is designed to recognise a road sign by subjecting the image data to pattern recognition.

18. Driver assistance system according to one of Claims 15 to 17,
**characterized in that**
the portable communication appliance (22) is designed to take the image data from the front camera (16) as a basis for recognising road markings, to determine when the vehicle (1) is about to or has already drive (n) over a recognised road marking, and to output a warning signal which warns the driver about the road marking being about to be or having been driven over when it has been determined that the recognised road marking is about to be or has already been driven over.

19. Driver assistance system according to one of Claims 15 to 18,
**characterized in that**
the portable communication appliance (22) is designed to take the image data as a basis for recognising an obstacle, particularly a pedestrian, and to output a signal which informs the driver about the recognised obstacle when an obstacle has been recognised.

20. Driver assistance system according to one of Claims 15 to 19,
**characterized in that**
the portable communication appliance (22) is designed to take a result of the processing of the image data from the front camera (16) as a basis for sending control data to a headlamp controller (11) for actuating a headlamp (12, 13) on the vehicle (1).

21. Driver assistance system according to one of Claims 14 to 20,
**characterized in that**
the portable communication appliance (22) is designed to receive image data directly from a multiplicity of cameras (17) arranged on an exterior surface of the vehicle (1), to process the image data from all cameras (17), and to take a result of the processing as a basis for performing a function which assists the driver in driving the vehicle (1).

22. Driver assistance system according to Claim 21,
**characterized in that**
the portable communication appliance (22) has a display device (25) and is designed to display images based on the received image data from the cameras (17) on the display device (25).

23. Driver assistance system according to Claim 21 or 22,
**characterized in that**
the portable communication appliance (22) has an acceleration sensor and/or a navigation system and is designed to take measured values from the acceleration sensor and/or data from the navigation system as a basis for selecting an area from an overall surrounding area which can be captured by the cameras (17) and to use its display device (25) to display images pertaining to the selected area.

24. Driver assistance system according to one of Claims 21 to 23,
**characterized in that**
the portable communication appliance (22) is designed to process the image data from the cameras (17) in order to calculate such image data as contain a presentation of a plan view of at least one area from an overall surrounding area which can be captured by the cameras (17).

25. Driver assistance system according to one of Claims 14 to 24,
**characterized in that**
the portable communication appliance (22) is designed to receive radar data pertaining to a surrounding area of the vehicle (1) directly from a radar appliance (18), to process said data, and to take a result of the processing as a basis for performing a function which assists the driver in driving the vehicle (1).

26. Driver assistance system according to one of Claims 14 to 25,
**characterized in that**
the portable communication appliance (22) is designed to receive ultrasonic data pertaining to a surrounding area of the vehicle (1) directly from an ultrasonic sensor (19), to process said data, and to take a result of the processing as a basis for performing a function which assists the driver in driving the vehicle (1).

27. Driver assistance system according to one of Claims 14 to 26,
**characterized in that**
the portable communication appliance (22) has an acceleration sensor and/or a navigation system and/or a compass and is designed to take measured values from the acceleration sensor and/or data from the navigation system and/or measured values from the compass as a basis for performing a function which assists the driver in driving the vehicle (1).

28. Driver assistance system according to one of Claims 14 to 27,
**characterized in that**
the portable communication appliance (22) is designed to transmit data received from a sensor device (16, 17, 18, 19) to a data processing apparatus outside the vehicle.

29. Vehicle (1) having a driver assistance system according to one of the preceding claims.

30. Method for assisting a driver in driving a vehicle (1) using a driver assistance system which has at least one sensor device (16, 17, 18, 19) installed in the vehicle (1),
**characterized in that**
a communication interface (21) of the sensor device (16, 17, 18, 19) is used to transmit data directly between the controller (2, 4, 6, 9, 11, 14) and/or the sensor device (16, 17, 18, 19) and a portable communication appliance (22) at least in one direction by bypassing a data transmission system (20) inside the vehicle, and the data transmission causes the portable communication appliance (22) and the sensor device (16, 17, 18, 19) to interact such that at least one function is performed which assists the driver in driving the vehicle (1).

## Revendications

1. Système d'assistance au conducteur pour un véhicule (1), le système d'assistance au conducteur possédant au moins un dispositif de détection (16, 17, 18, 19) intégré dans le véhicule (1),
**caractérisé en ce que**
l'au moins un dispositif de détection (16, 17, 18, 19) possède une interface de communication (21) par le biais de laquelle, en contournant un système de transmission de données (20) interne au véhicule, des données peuvent être transmises directement au moins dans une direction entre le dispositif de détection (16, 17, 18, 19) et un appareil de communication mobile (22), l'appareil de communication mobile (22) et le dispositif de détection (16, 17, 18, 19) coopérant du fait de la transmission de données de telle sorte qu'au moins une fonction peut être exécutée, laquelle assiste un conducteur lors de la conduite du véhicule (1).

2. Système d'assistance au conducteur selon la revendication 1, **caractérisé en ce qu'**il comprend le système de transmission de données (20) interne au véhicule et l'au moins un dispositif de détection (16, 17, 18, 19) est raccordé au système de transmission de données (20), une fonction d'assistance au conducteur pouvant être mise à disposition par l'au moins un dispositif de détection (16, 17, 18, 19) en s'appuyant sur une transmission de données par le biais du système de transmission de données (20) interne au véhicule, de sorte que la fonction qui peut être exécutée par la coopération de l'appareil de communication mobile (22) avec le dispositif de détection (16, 17, 18, 19) est une fonction supplémentaire.

3. Système d'assistance au conducteur selon la revendication 1 ou 2, **caractérisé en ce que** des données peuvent être transmises directement par le biais de l'interface de communication (21) entre le dispositif de détection (16, 17, 18, 19) et un appareil de communication mobile (22) réalisé sous la forme d'un téléphone mobile ou d'un ordinateur portable.

4. Système d'assistance au conducteur selon l'une des revendications précédentes, **caractérisé en ce que** l'interface de communication (21) est configurée pour une transmission de données sans fil.

5. Système d'assistance au conducteur selon l'une des revendications précédentes, **caractérisé en ce que** l'interface de communication (21) est configurée pour émettre et/ou recevoir des données selon une norme de la famille IEEE-802.11 et/ou une norme de la famille IEEE-802.15.

6. Système d'assistance au conducteur selon l'une des revendications précédentes, **caractérisé en ce qu'**un dispositif de détection (16, 17, 18, 19) intégré dans le véhicule (1) est une caméra avant (16) qui est placée dans un espace intérieur du véhicule (1) derrière un pare-brise (8) et qui est configurée pour acquérir des données d'image sur une zone environnante à l'avant du véhicule (1) et pour transmettre les données d'image à l'appareil de communication mobile (22).

7. Système d'assistance au conducteur selon l'une des revendications précédentes, **caractérisé en ce qu'**un dispositif de détection (16, 17, 18, 19) intégré dans le véhicule (1) est un appareil radar (18) qui est configuré pour acquérir des données radar sur une zone environnante du véhicule (1) et pour transmettre les données radar à l'appareil de communication mobile (22).

8. Système d'assistance au conducteur selon l'une des revendications précédentes, **caractérisé en ce qu'**un dispositif de détection (16, 17, 18, 19) intégré dans le véhicule (1) est un détecteur à ultrasons (19) qui est configuré pour acquérir des données ultrasoniques sur une zone environnante du véhicule (1) et pour transmettre les données ultrasoniques à l'appareil de communication mobile (22).

9. Système d'assistance au conducteur selon l'une des revendications précédentes, **caractérisé en ce qu'**un dispositif de détection (16, 17, 18, 19) intégré dans le véhicule (1) comporte au moins une caméra (17) disposée sur une surface extérieure du véhicule (1), notamment une pluralité de caméras (17), laquelle/lesquelles est/sont configurée(s) pour acquérir des données d'image sur une zone environnante du véhicule (1) et pour transmettre les données d'image à l'appareil de communication mobile (22).

10. Système d'assistance au conducteur selon l'une des revendications précédentes, **caractérisé en ce qu'**un contrôleur (2, 4, 6, 9, 11, 14) intégré dans le véhicule (1) est un contrôleur de frein (4) qui est conçu pour recevoir, par le biais de son interface de communication (21), des données de commande directement de la part de l'appareil de communication mobile (22) et pour commander un système de freinage (5) du véhicule (1) en fonction des données de commande.

11. Système d'assistance au conducteur selon l'une des revendications précédentes, **caractérisé en ce qu'**un contrôleur (2, 4, 6, 9, 11, 14) intégré dans le véhicule (1) est un contrôleur de projecteur (11) qui est conçu pour recevoir, par le biais de son interface de communication (21), des données de commande directement de la part de l'appareil de communication mobile (22) et pour commander un projecteur (12, 13) du véhicule (1) en fonction des données de commande.

12. Système d'assistance au conducteur selon l'une des revendications précédentes, **caractérisé en ce qu'**un contrôleur (2, 4, 6, 9, 11, 14) intégré dans le véhicule (1) est un contrôleur de direction (2) qui est conçu pour recevoir, par le biais de son interface de communication (21), des données de commande directement de la part de l'appareil de communication mobile (22) et pour commander un système de direction (3) du véhicule (1) en fonction des données de commande.

13. Système d'assistance au conducteur selon l'une des revendications précédentes, **caractérisé en ce qu'**un contrôleur (2, 4, 6, 9, 11, 14) intégré dans le véhicule (1) est un contrôleur d'écran (14) qui est conçu pour recevoir, par le biais de son interface de communication (21), des données d'image directement de la part de l'appareil de communication mobile (22) et pour afficher sur un écran (15) du système d'assistance au conducteur des images qui s'appuient sur les données d'image reçues.

14. Système d'assistance au conducteur selon l'une des revendications précédentes, **caractérisé en ce qu'**il inclut l'appareil de communication mobile (22).

15. Système d'assistance au conducteur selon la revendication 14, **caractérisé en ce que** l'appareil de communication mobile (22) est conçu pour recevoir des données d'image sur une zone environnante à l'avant du véhicule (1) directement de la part d'une caméra avant (16), pour les traiter et, suivant un résultat du traitement, exécuter une fonction qui assiste le conducteur lors de la conduite du véhicule (1).

16. Système d'assistance au conducteur selon la revendication 15, **caractérisé en ce que** l'appareil de communication mobile (22) possède un dispositif d'affichage (25) et il est conçu pour afficher sur le dispositif d'affichage (25) des images qui s'appuient sur les données d'image reçues.

17. Système d'assistance au conducteur selon la revendication 15 ou 16, **caractérisé en ce que** l'appareil de communication mobile (22) est conçu pour soumettre les données d'images à une reconnaissance de modèle en vue de reconnaître un panneau de signalisation.

18. Système d'assistance au conducteur selon l'une des revendications 15 à 17, **caractérisé en ce que** l'appareil de communication mobile (22) est conçu pour, suivant les données d'image de la caméra avant (16), reconnaître des marquages de voie de circulation, constater un franchissement à venir ou déjà effectué d'un marquage de voie de circulation par le véhicule (1) et, après avoir constaté un franchissement à venir ou déjà effectué d'un marquage de voie de circulation reconnu, délivrer un signal d'alerte qui avertit le conducteur du franchissement à venir ou déjà effectué du marquage de voie de circulation.

19. Système d'assistance au conducteur selon l'une des revendications 15 à 18, **caractérisé en ce que** l'appareil de communication mobile (22) est conçu pour, suivant les données d'image, reconnaître un obstacle, notamment un piéton et, après la reconnaissance d'un obstacle, délivrer un signal qui informe le conducteur à propos de l'obstacle reconnu.

20. Système d'assistance au conducteur selon l'une des revendications 15 à 19, **caractérisé en ce que** l'appareil de communication mobile (22) est conçu pour, suivant un résultat du traitement des données d'image de la caméra avant (16), envoyer des données de commande au contrôleur de projecteur (11) pour commander un projecteur (12, 13) du véhicule (1).

21. Système d'assistance au conducteur selon l'une des revendications 14 à 20, **caractérisé en ce que** l'appareil de communication mobile (22) est conçu pour recevoir des données d'image directement de la part d'une pluralité de caméras (17) disposées sur une surface extérieure du véhicule (1), traiter les données d'image de toutes les caméras (17) et, suivant le résultat du traitement, exécuter une fonction qui assiste le conducteur lors de la conduite du véhicule (1).

22. Système d'assistance au conducteur selon la revendication 21, **caractérisé en ce que** l'appareil de communication mobile (22) possède un dispositif d'affichage (25) et il est conçu pour afficher sur le dispositif d'affichage (25) des images qui s'appuient sur les données d'image reçues de la caméra (17).

23. Système d'assistance au conducteur selon la revendication 21 ou 22, **caractérisé en ce que** l'appareil de communication mobile (22) possède un capteur d'accélération et/ou un système de navigation et il est conçu pour, en fonction des valeurs mesurées du capteur d'accélération et/ou des données du système de navigation, sélectionner une zone d'une zone environnante totale pouvant être balayée par la caméra (17) et afficher sur son dispositif d'affichage (25) des images sur la zone sélectionnée.

24. Système d'assistance au conducteur selon l'une des revendications 21 à 23, **caractérisé en ce que** l'appareil de communication mobile (22) est conçu pour, par le traitement des données d'image de la caméra (17), calculer les données d'image qui contiennent une représentation d'une vue de dessus sur au moins une zone d'une zone environnante totale pouvant être balayée par la caméra (17).

25. Système d'assistance au conducteur selon l'une des revendications 14 à 24, **caractérisé en ce que** l'appareil de communication mobile (22) est conçu pour recevoir des données de radar sur une zone environnante du véhicule (1) directement de la part d'un appareil radar (18), les traiter et, suivant un résultat du traitement, exécuter une fonction qui assiste le conducteur lors de la conduite du véhicule (1).

26. Système d'assistance au conducteur selon l'une des revendications 14 à 25, **caractérisé en ce que** l'appareil de communication mobile (22) est conçu pour recevoir des données ultrasoniques sur une zone environnante du véhicule (1) directement de la part d'un détecteur à ultrasons (19), les traiter et, suivant un résultat du traitement, exécuter une fonction qui assiste le conducteur lors de la conduite du véhicule (1).

27. Système d'assistance au conducteur selon l'une des revendications 14 à 26, **caractérisé en ce que** l'appareil de communication mobile (22) possède un capteur d'accélération et/ou un système de navigation et/ou une boussole et il est conçu pour, en fonction des valeurs mesurées du capteur d'accélération et/ou des données du système de navigation et/ des valeurs mesurées de la boussole, exécuter une fonction qui assiste le conducteur lors de la conduite du véhicule (1).

28. Système d'assistance au conducteur selon l'une des revendications 14 à 27, **caractérisé en ce que** l'appareil de communication mobile (22) est conçu pour transmettre les données reçues de la part d'un dispositif de détection (16, 17, 18, 19) à un système de traitement de données externe au véhicule.

29. Véhicule (1) équipé d'un système d'assistance au conducteur selon l'une des revendications précédentes.

30. Procédé d'assistance d'un conducteur lors de la conduite d'un véhicule (1) à l'aide d'un système d'assistance au conducteur qui possède au moins un dispositif de détection (16, 17, 18, 19) intégré dans le véhicule (1),
**caractérisé en ce que**
des données sont transmises directement au moins dans une direction entre le dispositif de détection (16, 17, 18, 19) et un appareil de communication mobile (22) par le biais d'une interface de communication (21) du dispositif de détection (16, 17, 18, 19) en contournant un système de transmission de données (20) interne au véhicule, et l'appareil de communication mobile (22) et le dispositif de détection (16, 17, 18, 19) coopèrent du fait de la transmission de données de telle sorte qu'au moins une fonction est exécutée, laquelle assiste un conducteur lors de la conduite du véhicule (1).
